(19) **Europäisches Patentamt**
**European Patent Office**
**Office européen des brevets**

(11) **EP 4 647 219 A1**

(12) # EUROPEAN PATENT APPLICATION

(43) Date of publication:
**12.11.2025 Bulletin 2025/46**

(21) Application number: **25154032.4**

(22) Date of filing: **27.01.2025**

(51) International Patent Classification (IPC):
**B25J 19/02** (2006.01)       **B25J 19/06** (2006.01)
**B25J 5/00** (2006.01)         **B25J 11/00** (2006.01)

(52) Cooperative Patent Classification (CPC):
**B25J 5/007; B25J 11/008; B25J 19/02; B25J 19/06**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **09.05.2024 KR 20240061378**

(71) Applicant: **LG Electronics Inc.**
**Yeongdeungpo-gu**
**Seoul 07336 (KR)**

(72) Inventor: **PARK, Mihyun**
**06772 Seoul (KR)**

(74) Representative: **Vossius & Partner**
**Patentanwälte Rechtsanwälte mbB**
**Siebertstrasse 3**
**81675 München (DE)**

(54) **MOBILE ROBOT AND ITS OPERATION METHOD**

(57)    Proposed are a mobile robot (100) and an operational method of the mobile robot(100). The mobile robot (100) includes a projector (160) provided on one side of the mobile robot (100) in such a manner as to project visual information, and a control unit (180) configured to control the projector (160) in such a manner as to externally project the visual information. In the mobile robot(100), the control unit (180) controls the projector in such a manner that first visual information for marking a safety area is projected onto the ground in the vicinity of the mobile robot (100) while the mobile robot (100) travels, determines, based on at least one change in a travel state or a surrounding situation of the mobile robot (100), that the safety area is changed, and then controls the projector (160) in such a manner that at least one of the following: a size, a shape, or a color of the first visual information is changed and that the resulting first visual information is projected.

*FIG. 3A*

## Description

The present disclosure relates to a mobile robot and an operational method of the mobile robot and, more particularly, to a mobile robot, capable of projecting visual information for a safety area while the mobile robot travels, and an operational method of the mobile robot.

Description of the Related Art

In recent years, mobile robots have been utilized for various purposes. Therefore, in addition to a display, a projector has been mounted on the mobile robot as needed to provide various functions.

Usually, the use of the projector mounted on the mobile robot is limited to providing image display for entertainment.

It is disclosed in Korean Patent Application Publication No. 10-2019-0171901 (hereinafter referred to as 'Related Document 1') that a robot equipped with a projector selects a projection area based on image information and user information. However, Related Document 1 does not extensively provide visual information associated with the safety of a robot.

In addition, a technology for displaying a safety guide and information is only partially disclosed in Korean Patent Application Publication No. 10-2016-0162063 (hereinafter referred to as 'Related Document 2'). However, this technology provides only the safety guide in the designated form and does not reflect various states or surrounding situations of a mobile robot. Consequently, the mobile robot does not perform a satisfactory function for ensuring travel safety.

One object of the present disclosure is to provide a mobile robot that includes a projector on the body and is capable of projecting visual information for marking a safety area in such a manner as to prevent safety accidents, such as collisions, while traveling, and an operational method of the mobile robot.

Another object of the present disclosure is to provide a mobile robot capable of providing travel safety by externally marking a safety area suitable for a current travel state of the mobile robot using a projector included in the mobile robot, and an operational method of the mobile robot.

Yet another object of the present disclosure is to provide a mobile robot capable of externally marking an expected operation of itself, even if an obstacle or a person in the vicinity of the mobile robot moves in an unpredicted direction, thereby avoiding a collision, and an operational method of the mobile robot.

Another object of the present disclosure is to provide a mobile robot capable of marking a position of the mobile robot having a different travel state than an external mobile robot, even if mutual communication among a plurality of mobile robots is difficult or communication with the mobile robot is in an unstable state, and an operational method of the mobile robot.

Still another object of the present disclosure is to provide a mobile robot capable of externally marking a safety area in such a manner that a change in an operational state of the mobile robot, such as the use of the mobile robot with a cart connected thereto, is immediately perceived even from in front of the mobile robot, and an operational method of the mobile robot.

Still another object of the present disclosure is to provide a mobile robot capable of externally marking a risk area for safety through a projector in a case where the risk area is encountered while the mobile robot travels through a designated travel space, and an operational method of the mobile robot.

Still another object of the present disclosure is to provide a mobile robot capable of externally marking a safety area associated with traveling through a projector provided on one side thereof while traveling.

Still another object of the present disclosure is to provide a mobile robot capable of sensing a change in a travel stare or a surrounding situation of the mobile robot and then externally projecting a marking of a safety area.

According to one aspect of the present disclosure, there is provided a mobile robot including: a projector provided on one side of the mobile robot in such a manner as to project visual information; and a control unit configured to control the projector in such a manner as to externally project the visual information. In the mobile robot, the control unit controls the projector in such a manner that first visual information for marking a safety area is projected onto the ground in the vicinity of the mobile robot while the mobile robot travels, determines, based on at least one change in a travel state or a surrounding situation of the mobile robot, that the safety area is changed, and controls the projector in such a manner that the first visual information is changed according to the determination and that the changed first visual information is projected.

In the mobile robot, the safety area is an area outside an access restriction area determined on the basis of a form and the travel state of the mobile robot, and the first visual information may be at least one of the following: an image or text that indicates the access restriction area in such a manner that a border between the safety area and the access restriction area is visually distinguished.

The mobile robot further includes a sensing unit configured to sense a travel speed of the mobile robot, wherein the control unit perceives the sensed travel speed as a change in the travel state of the mobile robot, determines a change in the safety area, and controls the projector in such a manner that at least one of the following: a color or a size of the first visual information is changed according to the determination.

In the mobile robot, the sensing unit senses a travel direction of the mobile robot, and the control unit controls the projector in such a manner that an image shape of the first visual information is elongated toward the sensed travel direction.

In the mobile robot, an image size of the first visual information increases or decrease in correspondence with the sensed travel speed, and an image color of the first visual information changes in such a manner that a warning level varies in correspondence with the sensed travel speed.

The mobile robot further includes a sensing unit configured to sense an obstacle in the vicinity of the mobile robot, wherein the control unit controls the projector, based on the sensed obstacle approaching the mobile robot, in such a manner that the first visual information varies according to a state of the sensed obstacle.

In the mobile robot, the travel state includes an operational state that varies depending on whether another moving body is connected, wherein the control unit senses the moving body connected to a connection member of the mobile robot, and controls the projector, based on information on the moving body, in such a manner that the first visual information is changed and that the changed first visual information is projected.

In the mobile robot, the information on the moving body includes information on the number of moving bodies connected to the mobile robot. In addition, in the mobile robot, the control unit controls the projector, based on the information on the number of connected moving bodies, in such a manner that at least one of the following varies: a size or a shape of the first visual information.

In the mobile robot, the control unit controls the projector, based on the information on the number of connected moving bodies, in such a manner that at least one change in a size or a shape of the first visual information appears in correspondence with a travel direction of the mobile robot.

In the mobile robot, the information on the moving body includes information on an amount of load present on the moving body connected to the mobile robot. In addition, in the mobile robot, the control unit estimates an access restriction area based on the information on the amount of load present on the moving body, and controls the projector in such a manner as to change at least one of the following according to the estimated access restriction area: a size or a shape of the first visual information.

The mobile robot further includes a sensing unit configured to sense a surrounding situation of the mobile robot at a position of the mobile robot. In addition, in the mobile robot, the control unit perceives a crossway or a corner due to a change in the surrounding situation of the mobile robot and controls the projector, based on the mobile robot approaching the crossway or the corner, in such a manner as to change at least one of the following: a shape or a size of the first visual information.

In the mobile robot, the control unit adjusts, in correspondence with the extent to which the mobile robot approaches the crossway or the corner, the extent to which at least one of the following is changed: the shape or the size of the first visual information. In addition, in the mobile robot, when it is sensed that the mobile robot has passed through the crossway or the corner, the mobile robot controls the processor in such a manner that the shape or the size of the first visual information is restored to the previous state thereof.

In the mobile robot, the control unit projects the first visual information onto the ground before the mobile robot starts to travel, and, based on a predetermined time having elapsed after the mobile robot stopped traveling, interrupts the projection of the first visual information.

According to another aspect of the present disclosure, there is provided a mobile robot including: a projector provided on one side of the mobile robot in such a manner as to project visual information; and a control unit configured to control the projector in such a manner as to externally project the visual information. In addition, in the mobile robot, the control unit controls the projector in such a manner that first visual information for marking a safety area is projected onto the ground in the vicinity of the mobile robot while the mobile robot travels, determine the next operation of the mobile robot based on at least one change in a travel state or a surrounding situation of the mobile robot, and control the projector in such a manner that a second visual information associated with the scheduled next operation is projected according to the determination.

The mobile robot further includes a sensing unit configured to sense an obstacle in the vicinity of the mobile robot, wherein the control unit determines the next operation of the mobile robot based on the obstacle approaching the mobile robot due to a change in the surrounding situation and controls the projector in such a manner that the second visual information indicating the sensing of the obstacle is projected according to the determination before the scheduled next operation is performed.

In the mobile robot, as the next operation, the control unit determines to travel around the obstacle and control the projector in such a manner that the second visual information indicating a position of the obstacle is projected according to the determination before the mobile travels around the obstacle.

In the mobile robot, in a case where the mobile robot is unable to travel around the obstacle due to a travel state of the mobile robot, in order to allow the sensed obstacle to move around the mobile robot, the control unit controls the projector in such a manner that a third visual information indicating access restriction is projected onto the ground in the vicinity of the mobile robot.

The mobile robot further includes a sensing unit configured to sense an obstacle in the vicinity of the mobile robot. In addition, in the mobile robot, as the next operation of the mobile robot, the control unit determines to provide a mobile guide for a first obstacle, based on the sensing of a plurality of obstacles due to a change in the surrounding situation, and controls the projector in such a manner that the second visual information indicating the mobile guide based on positions of the mobile robot and the second obstacle, is projected according to the determination.

In the mobile robot, the second visual information includes a first mobile guide for marking a safety area, which is based on the positions of the mobile robot and the second obstacles, and a second mobile guide for marking a risk area, which is based on the positions of the mobile robot and the second obstacles, the second mobile guide being distinguished from the first mobile guide.

The mobile robot further includes a sensing unit configured to sense a state of the ground while the mobile robot travels. In addition, in the mobile robot, the control unit detects a risk area based on the sensed state of the ground and controls the projector in such a manner that the second visual information indicating the detected risk area is marked before the mobile robot comes to a stop as the next operation thereof.

With the mobile robot and the operational method of the mobile robot according to an embodiment of the present disclosure, while traveling, the mobile robot marks the safety area through the projector. Furthermore, while traveling, the mobile robot adaptively varies the safety area according to the travel state and the surrounding situation of the mobile robot. Consequently, the travel safety can be ensured more reliably, and can be recognized quickly from the outside.

In addition, the visual information for ensuring the travel safety can be projected in various forms. The visual information to be projected is flexibly varied in such a manner as to reflect the safety area that is changed according to the travel state and the surrounding situation of the mobile robot.

In addition, mutual recognition is possible without direct communication between the mobile robot and another robot in the vicinity thereof, allowing them to recognize each other's next operations for the travel safety. Accordingly, the mobile robot effectively deals with the robot to prevent a collision or a similar accident, and a manager visually anticipates the next operation of the mobile robot.

In accordance with the purpose of using the mobile robot, the mobile robot is used with another moving body being connected to the rear thereof. In this case, pieces of information such as the presence of the moving body, the number of connected moving bodies, and loads present on the moving bodies are included in the visual image for the safety area, which is projected onto the ground in front of the mobile robot. Additionally, a safety distance is in the visual image and is marked. Thus, an external robot or a person passes around not only the mobile robot that travels, but also the entire mobile robot that includes various carts connected to the rear thereof.

In addition, a caution section and a risk section that the mobile robot senses while traveling can be externally marked in such a manner that a robot or a person in the vicinity of the mobile robot perceives these sections, thereby aiding in securing the travel safety of the robot or the safety of the person.

The above and other aspects, features and other advantages of the present disclosure will be more clearly understood from the following detailed description taken in conjunction with the accompanying drawings, in which:

FIG. 1 is a block diagram illustrating an exemplary configuration of a mobile robot according to the present disclosure;

FIG. 2 is a representative flowchart that is referenced to describe an operational method of a mobile robot according to the present disclosure;

FIGS. 3A to 3C are views illustrating various examples, respectively, where the mobile robot according to the present disclosure externally marks a traveling-associated safety area;

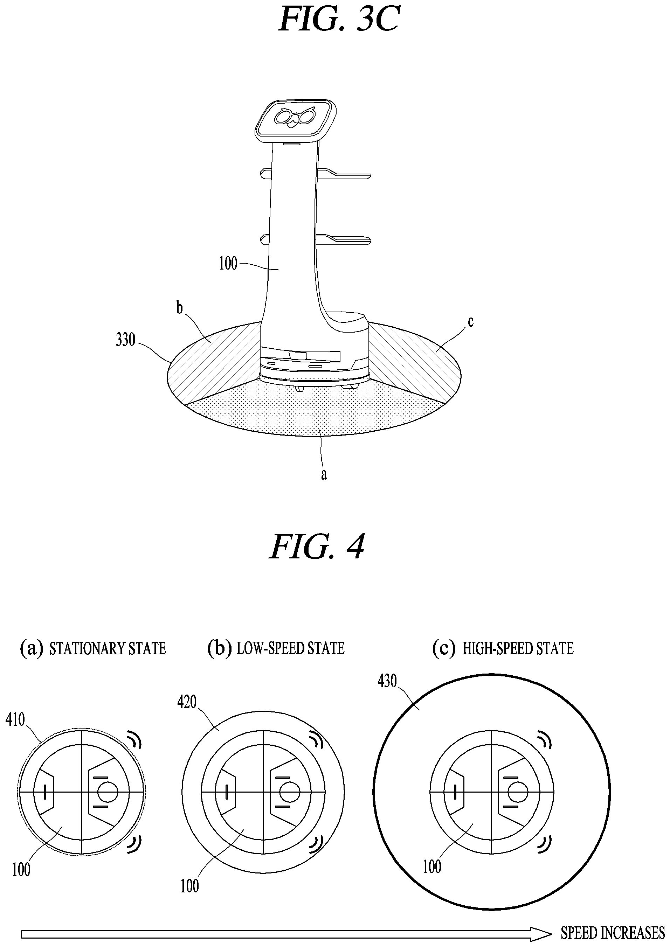

(a), (b) and (c) of FIG. 4 are exemplary views, respectively, that are referenced to describe a method of marking the safety area in a manner that varies with a travel speed of the mobile robot according to the present disclosure;

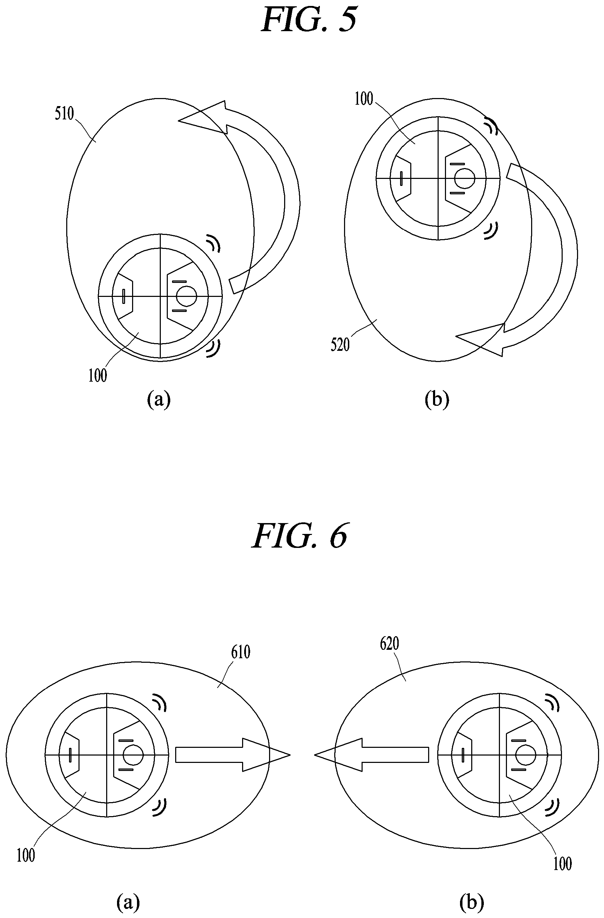

(a) and (b) of FIG. 5 and (a) and (b) of FIG. 6 are exemplary views, respectively, that are referenced to describe a method in which the mobile robot according to the present disclosure marks the safety area in a manner that varies according to a travel direction;

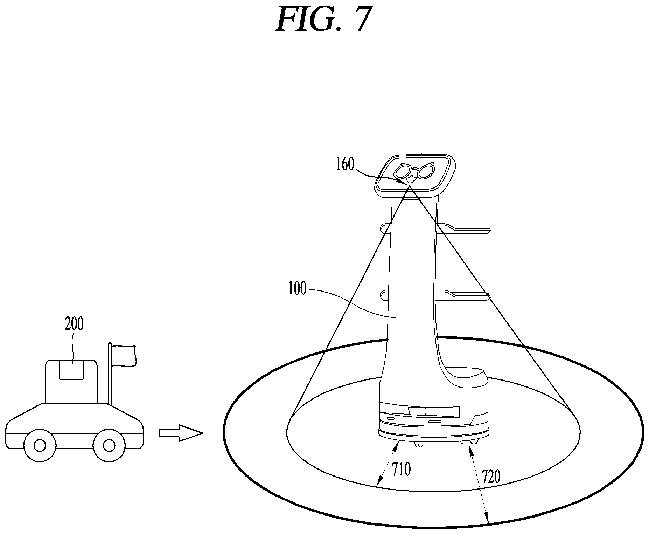

FIG. 7 is an exemplary view that is referenced to describe how the safety area is marked in a varied manner when an obstacle approaches the mobile robot according to the present disclosure;

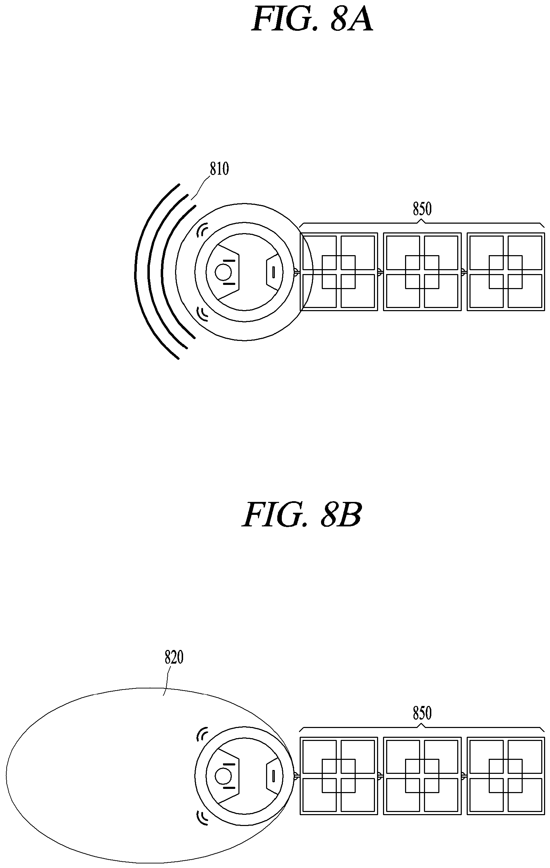

FIGS. 8A and 8B are exemplary views, respectively, that are referenced to describe a change in the marking of the safety area, which varies with a change in the form of the mobile robot according to the present disclosure;

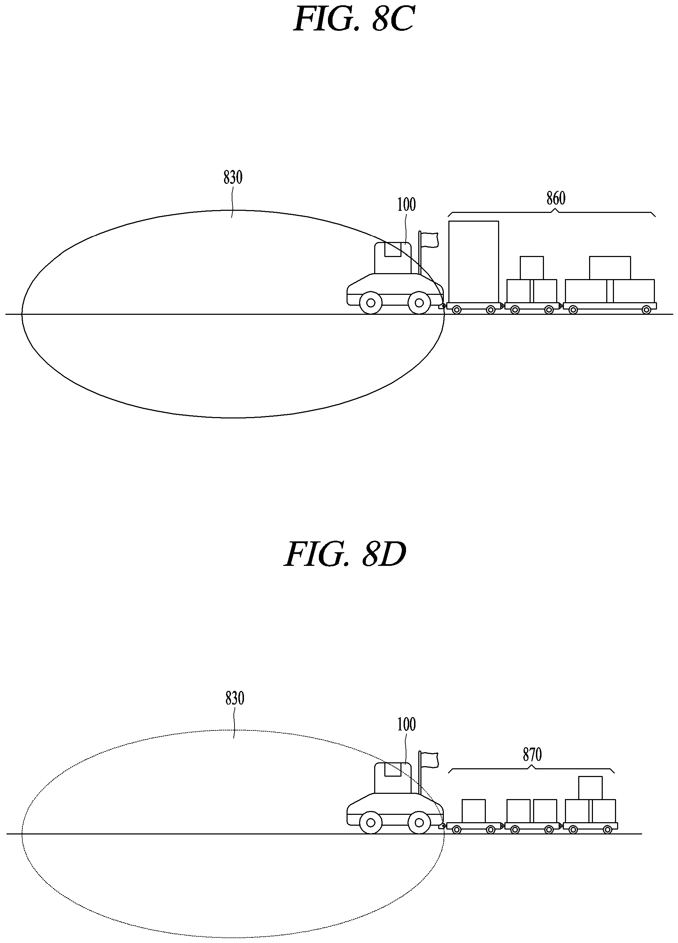

FIGS. 8C and 8D are exemplary views, respectively, that are referenced to describe a change in the marking of the safety area based on information on an amount of load present on another moving body connected to the mobile robot according to the present disclosure;

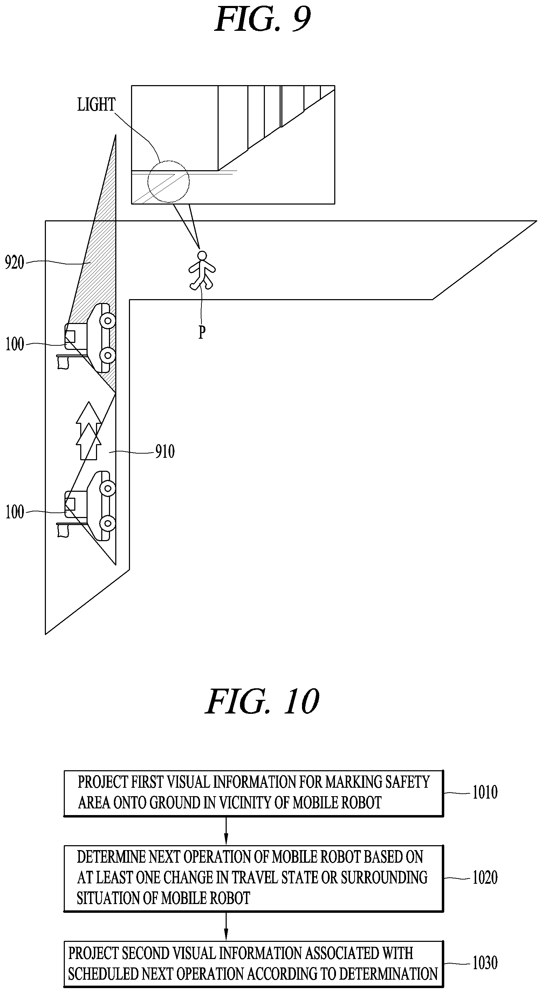

FIG. 9 is an exemplary view that is referenced to describe how the safety area is marked in a varied manner when the mobile robot according to the present disclosure travels along a corner;

FIG. 10 is a flowchart that is referenced to describe another operational method of the mobile robot according to the present disclosure;

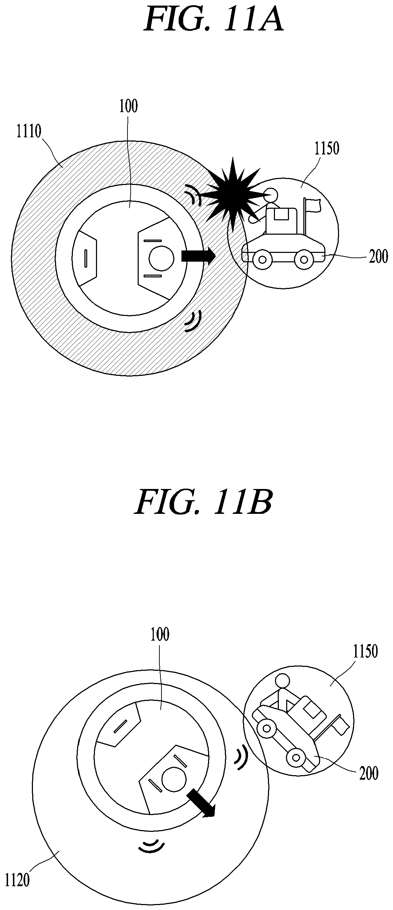

FIGS. 11A and 11B are exemplary views each illustrating that the mobile robot according to the present disclosure marks the intention thereof to perform a travel-around operation, along with the safety area for itself, in response to an approaching obstacle;

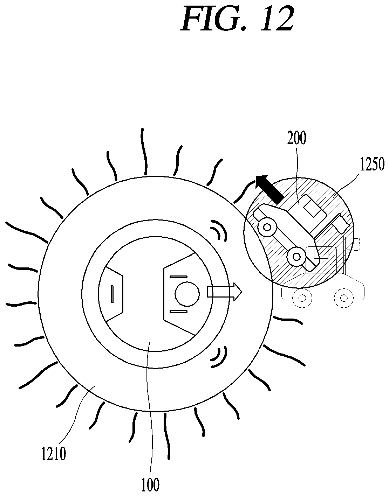

FIG. 12 is an exemplary view illustrating that, while traveling, the mobile robot marks the inability thereof to perform the travel-around operation, along with the safety area for itself, in response to an approaching obstacle;

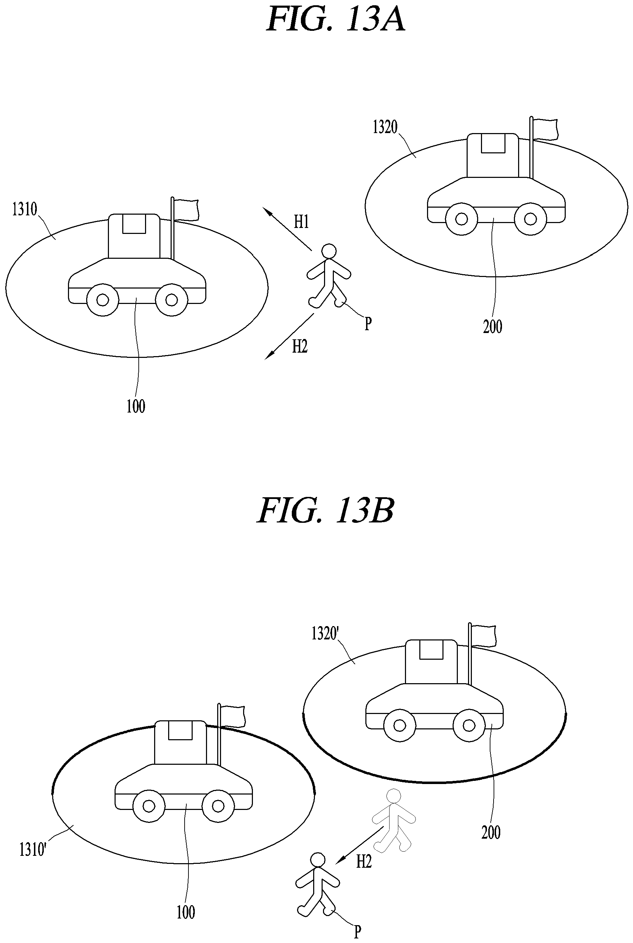

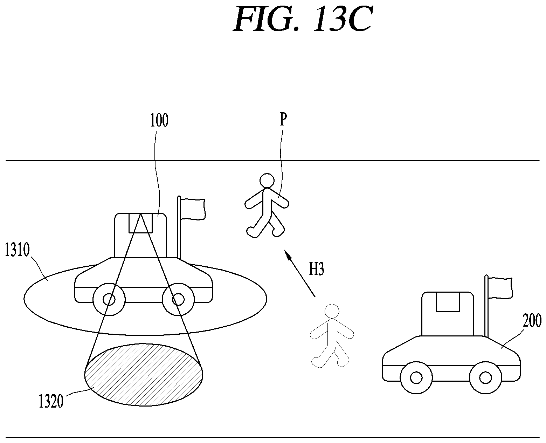

FIGS. 13A, 13B, and 13C are views, respectively, that are referenced to describe an example where, when the mobile robot according to the present disclosure senses a plurality of obstacles, the mobile robot marks the safety area by considering expected movements of the obstacles; and

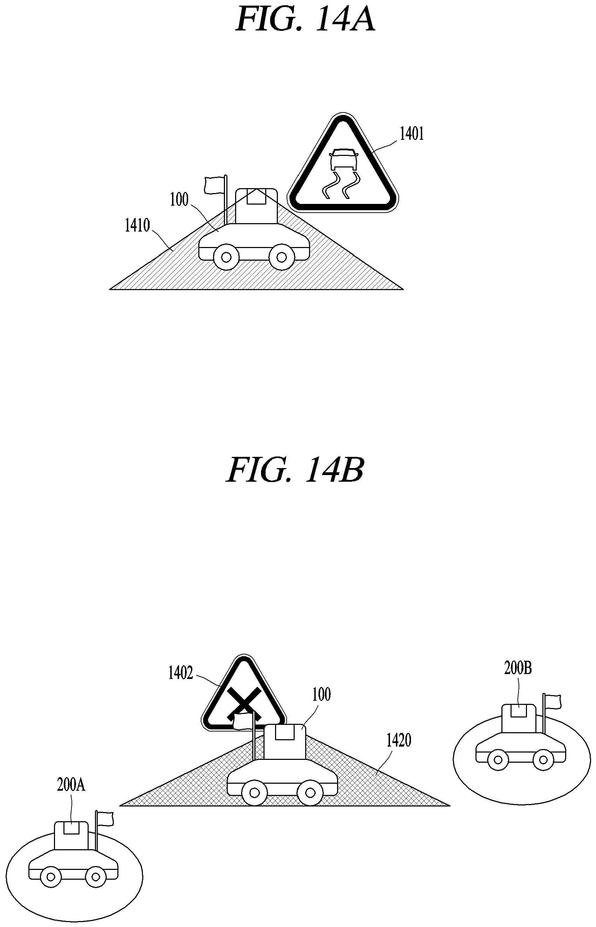

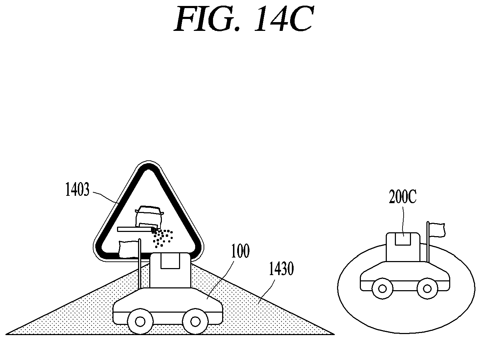

FIGS. 14A, 14B, and 14C are views, respectively, that are referenced to mark a risk area sensed while the mobile robot according to the present disclosure travels.

Description will now be given in detail according to exemplary embodiments disclosed herein, with reference to the accompanying drawings. For the sake of brief description with reference to the drawings, the same or equivalent components may be provided with the same or similar reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. In describing the present disclosure, if a detailed explanation for a related known technology or construction is considered to unnecessarily divert the gist of the present disclosure, such explanation has been omitted but would be understood by those skilled in the art. The accompanying drawings are used to help easily understand the technical idea of the present disclosure and it should be understood that the idea of the present disclosure is not limited by the accompanying drawings. The idea of the present disclosure should be construed to extend to any alterations, equivalents and substitutes besides the accompanying drawings.

It will be understood that although the terms first, second, etc. may be used herein to describe various elements, these elements should not be limited by these terms. These terms are generally only used to distinguish one element from another.

It will be understood that when an element is referred to as being "connected with" another element, the element can be connected with the another element or intervening elements may also be present. In contrast, when an element is referred to as being "directly connected with" another element, there are no intervening elements present.

A singular representation may include a plural representation unless it represents a definitely different meaning from the context.

Terms such as "include" or "has" are used herein and should be understood that they are intended to indicate an existence of several components, functions or steps, disclosed in the specification, and it is also understood that greater or fewer components, functions, or steps may likewise be utilized.

A 'mobile robot' disclosed in the present specification may perform autonomous traveling by itself and refers to a machine that operates to execute an assigned task. Mobile robots may be categorized by their usage purpose and application into those for industry, home, military, and medical treatment.

Tasks assigned to the mobile robot may include cleaning, delivery, serving, product arrangement, guiding, content provision, and the like. The mobile robot may perform various functions, operations, and the like to execute the assigned task. In addition, the mobile robot includes a drive unit that has an actuator, a motor, a brake, and the like, to perform an operation for autonomous traveling.

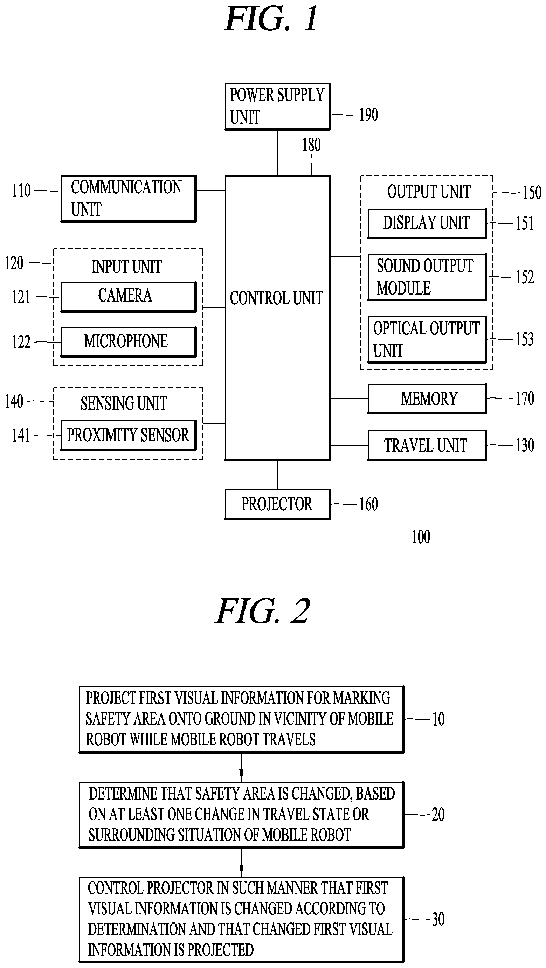

FIG. 1 is a block diagram illustrating an exemplary configuration of a mobile robot 100 according to the present disclosure.

With reference to FIG. 1, the mobile robot 100 according to the present disclosure may include a communication unit 110, an input unit 120, a travel unit 130, a sensing unit 140, an output unit 150, a projector 160, memory 170, a control unit 180, and a power supply unit 190. Constituent elements illustrated in FIG. 1 are not all indispensable in implementing the mobile robot 100. The mobile robot 100 may include one or more constituent elements in addition to the above-mentioned constituent elements or may omit one or more constituent elements from among the above-mentioned constituent elements.

The communication unit 110 may include at least one module for enabling wireless communication between the mobile robot 100 and an external server, for example, an artificial intelligence server or an external terminal. In addition, the communication unit 110 may include one or more modules through which the mobile robot 100 is connected to one or more networks. In addition, the communication unit 110 may include one or more modules through which the mobile robot 100 can communicate with other robots.

The communication unit 110 may perform communications with an artificial intelligence (AI) server and other similar servers by using wireless Internet communication technologies, such as Wireless LAN (WLAN), Wireless Fidelity (Wi-Fi), Wi-Fi Direct, Digital Living Network Alliance (DLNA), Wireless Broadband (WiBro), World Interoperability for Microwave Access (WiMAX), High SpeedDownlink Packet Access (HSDPA), High Speed Uplink Packet Access (HSUPA), Long Term Evolution (LTE), and Long Term Evolution-Advanced (LTE-A). The communication unit 110 may also perform communications with an external terminal and other similar terminals by using short-range communication technologies, such as Bluetooth™, Radio Frequency Identification (RFID), Infrared Data Association (IrDA), Ultra Wideband (UWB), ZigBee, and Near Field Communication (NFC).

The input unit 120 may include a camera 121 or an image input unit for inputting an image signal, a sound reception module 122, for example, a microphone, for inputting an audio signal, and a user input unit (not illustrated) (for example, a touch key, a mechanical key, or the like) for receiving information, as input, from a user. Signal data, voice data, and image data, which are collected by the input unit 120, may be analyzed and processed as control commands.

The camera 121 may be provided on one side of the main body of the mobile robot 100 or at a plurality of positions on the main body. In the latter case, one camera may be provided on a front surface of the main body in such a manner as to face forward, and another camera may be provided on a side or rear surface of the main body in such a manner as to face sideways/backward. Accordingly, an angle of view covering 360 degrees can be formed.

When a plurality of cameras 121 is provided, a first camera may, for example, be a 3D stereo camera. The 3D stereo camera may perform functions such as obstacle sensing, recognition of a user's face, and stereoscopic image acquisition. Through the use of the first camera, the mobile robot 100 may sense and avoid an obstacle existing in the moving direction of itself and may perform various control operations by recognizing a user. In addition, the second camera may, for example, be a Simultaneous Localization And Mapping (SLAM) camera. The SLAM camera performs a function of tracking the current position of the camera through feature point matching and creating a 3D map based on the tracking result. The mobile robot 100 may ascertain a current position of itself using the second camera. In addition, the camera 121 may recognize an object in a viewing angle range and perform a function of capturing a still image and a moving image of the object. In relation to this, the camera 121 may include at least one of the following sensors: a camera sensor (for example, a CCD sensor or a CMOS sensor, among other sensors), a photo sensor (or image sensor), or a laser sensor. The camera 121 and the laser sensor may be combined to sense a touch of a sensing target on a 3D stereoscopic image. The photo sensor may be stacked on a display element, and be configured to scan the motion of the sensed target that approaches a touch screen. More specifically, the photo sensor includes photodiodes and transistors (TRs) mounted in rows/columns, and thus scans an object placed on the photo sensor using an electric signal that changes according to an amount of light applied to the photo diodes. That is, the photo sensor may perform calculation of coordinates of the sensing target that vary according to a change in the amount of light, and may acquire positional information of the sensing target based on the coordinates.

The travel unit 130 performs movement and rotation of the main body of the mobile robot 100. To this end, the travel unit 130 may include a plurality of wheels and driving motors. The operation of the travel unit 130 may be controlled according to a control command received by the control unit 180, and a notification may be provided through an optical output unit 153 such as an LED before and after the travel unit 130 is operated.

The sensing unit 140 may include one or more sensors for sensing at least one of the following information: internal information of the mobile robot, the surrounding environment of the mobile robot, or user information. For example, the sensing unit 140 may include at least one of the following sensors: a proximity sensor 141, an illumination sensor, a touch sensor, an acceleration sensor, a magnetic sensor, a G-sensor, a gyroscope sensor, a motion sensor, an RGB sensor, an infrared (IR) sensor, a finger scan sensor, an ultrasonic sensor, an optical sensor (for example, the camera 121), a microphone, a battery gauge, an environment sensor (for example, a barometer, a hygrometer, a thermometer, a radiation sensor, a thermal sensor, or a gas sensor, among others), or a chemical sensor (for example, an electronic nose, a health care sensor, or a biometric sensor, among other sensors).

The mobile robot 100 disclosed in the present specification may utilize, in combination, information obtained from at least two sensors of these sensors.

In addition, the sensing unit 140 may include a travel-related sensor that senses an obstacle, a state of the ground, and the like.

In addition, an illumination sensor of the sensing unit 140 may be used to determine an image size of visual information to be projected through the projector 160 described below.

Examples of the proximity sensor 141 may include a transmission type photoelectric sensor, a direct reflection type photoelectric sensor, a mirror reflection type photoelectric sensor, a high frequency oscillation type proximity sensor, a capacitive proximity type sensor, a magnetic type proximity sensor, and an infrared proximity sensor, among other sensors.

In addition, the proximity sensor 141 may include at least one of the following: a navigator camera, an ultrasonic sensor, a Lidar, or a ToF sensor, and may recognize the approach and position of the sensing target (for example, the user) through this device.

The output unit 150 may serve to generate an output related to visual information, auditory information, tactile information, or the like and may include at least one of the following: a touch screen 151, a sound output unit 152, or an optical output unit 153. The touch screen 151 may be interlayered with or integrally formed with a touch sensor to realize a touch screen. The touch screen may function as a user input unit for providing an input interface between the mobile robot 100 and the user and simultaneously provide an output interface between the mobile robot 100 and the user.

The sound output module 152 may perform a function of notifying the user of information in the form of voice, and may, for example, be in the form of a speaker. Specifically, a response or search result corresponding to the user's voice, which is received through the microphone 122 and a voice recognition unit (not illustrated) provided on the mobile robot 100, is output in the form of voice through the sound output module 152.

In addition, the sound output module 152 may output voice information related to a screen (for example, a menu screen or an advertisement screen, among other screens) displayed on the touch screen 151. To this end, the microphone 122 may perform a function of receiving the user's voice and the like. In addition, the microphone 122 may process an external sound signal into electrical voice data, and implement various noise removal algorithms for removing noise generated in the course of receiving the external sound signal.

In addition, the sound output module 152 may output a sound signal that matches visual information that is projected through the projector 160.

The optical output module 153 outputs a signal for providing a notification indicating that an event has occurred to the mobile robot 100, using light from a light source. For example, when a movement command is transferred to the travel unit 130 of the mobile robot 100, a signal for providing notification indicating a movement is output through the optical output module 153.

The projector 160 may be provided on one side of the main body of the mobile robot 100 or at a plurality of positions on the main body. Specifically, in a case where the projector 160 is positioned on an upper portion of the mobile robot 100, the projector 160 may be positioned above the travel unit 130. In addition, in a case where the projector 160 is positioned on a lower portion of the mobile robot 100, the projector 160 may be positioned on one side of the head of the mobile robot 100. In addition, the projector 160 may be provided at a plurality of positions on the main body of the mobile robot 100.

The projector 160 may be realized in such a manner as to rotate, move, or tilt in correspondence with the body of the mobile robot 100 when the body thereof rotates, moves, or tilts. As another example, the projector 160 may be formed in such a manner as to rotate and/or tilt by independently to adjust a projection angle. As still another example, the projector 160 may be a mobile projector formed in such a manner as to enable projection on various projection areas.

The projector 160 projects visual information onto the ground in the vicinity of the mobile robot 100. In one practical example, the projector 160 may project visual information onto a designated projection area. For example, while the mobile robot 100 stops or travels, the projector 160 may project visual information onto at least one of the following: the ground, a ceiling, or a wall surface.

In an embodiment of the present disclosure, the projector 160 may project visual information indicating a safety guide while the mobile robot 100 travels. In addition, the projector 160 may sense a travel state and/or a surrounding situation of the mobile robot 100 and project the safety guide accordingly.

The control unit 180 controls the overall operation of the mobile robot 100 and performs computation and data processing. In addition, the term 'control unit 180' may be considered synonymous with 'processor' or be understood as a module that includes the processor. The processor may include at least one of the following: a central processing unit or an application/communication processor.

In addition, the control unit 180 may determine the visual information to be projected through the projector 160 and control the overall operation of the projector 160, such as rotation, movement, and tilting, for projection angle adjustment.

In addition, the control unit 180 may control the travel unit 130 to move or rotate the mobile robot 100. In addition, the control unit 180 may include a learning data unit (not illustrated) to perform an operation associated with the artificial intelligence technology of the mobile robot 100. The learning data unit may be configured to receive, classify, store, and output information to be used for data mining, data analysis, intelligent decision making, a machine learning algorithm, and a machine learning technology. The learning data unit may include at least one memory unit configured to store information, which is received, detected, sensed, generated, or predefined through the mobile robot 100 or information output through the mobile robot in a different way, or to store data, which are received, detected, sensed, generated, predefined or output through another component, device, and terminal.

In one practical example, the learning data unit may be integrated with the mobile robot 100 or may have the memory thereof. In one practical example, the learning data unit may be realized through the memory 170. However, the learning data unit is not limited to this. Alternatively, the learning data unit may be implemented in external memory associated with the mobile robot 100, or may be realized through memory included in a server that is communicable with the mobile robot 100. In another practical example, the learning data unit may be realized through memory which is maintained in a cloud computing environment, or through remotely controllable memory, different from this memory, which is accessible by the mobile robot 100 through communication methods such as a network.

The learning data unit is typically configured to store data, which are used for supervised or unsupervised learning, data mining, prediction analysis, or a different machine learning technology, in one or more databases for the purpose of identification, indexation, classification, manipulation, storage, search, and output. Information stored in the learning data unit may be used by the control unit 180, which uses at least one of the following different types: the data analysis, the machine learning algorithm, or the machine learning technology. Alternatively, this information may be used by a plurality of control units (processors) included in the mobile robot 100.

The control unit 180 may determine or predict an executable operation of the mobile robot on the basis of information determined or generated using the data analysis, the machine learning algorithm, and the machine learning technology. To this end, the control unit 180 may request, search for, receive, or utilize data from a learning data unit. The control unit 180 may perform various functions of realizing a knowledge-based system, an inference system, a knowledge acquisition system, and the like, and may perform various functions for a system (for example, a fuzzy logic system) for uncertain inference, an adaptation system, a machine learning system, an artificial neural system, and the like.

The control unit 180 may also include sub-modules, such as an I/O processing module, an environmental condition module, a speech-to-text (STT) processing module, a natural language processing module, a task flow processing module, and a service processing module, which enable voice and natural language processing. Each of the sub-modules may have the authority to access one or more systems, data, models, or their subsets or supersets in the mobile robot 100. At this point, objects that each of the sub-modules has the authority to access may include scheduling, a vocabulary index, user data, a task flow model, a service model, and an automatic speech recognition (ASR) system.

In one or several practical examples, the control unit 180 may also be configured to detect and sense the user's requirements on the basis of a contextual condition or the user's intent that is represented by the user's input or natural language input on the basis of the data in the learning data unit. When the operation of the mobile robot 100 is determined based on the data analysis, the machine learning algorithm, and the machine learning technology, which are performed by the learning data unit, the control unit 180 may control constituent elements of the mobile robot 100 to perform the determined operation. The control unit 180 may perform the determined operation by controlling the mobile robot, based on a control command.

Data supporting various functions of the mobile robot 100 are stored in the memory 170. For example, a multiplicity of application programs (or applications), which are executed in the mobile robot 100, and data or commands for operating the mobile robot 100 may be stored in the memory 170. In addition, a variable call word for performing a function of a voice conversation with the user may be stored in the memory 170.

The memory 170, for example, may include at least one of the following types of storage media: flash memory, hard disk memory, solid-state disk (SSD) memory, silicon disk drive (SDD) memory, multimedia card micro memory, card type memory (for example, SD or DX memory), Random Access Memory (RAM), Static Random Access Memory (SRAM), Read-Only Memory (ROM), Electrically Erasable Programmable Read-Only Memory (EEPROM), Programmable Read-Only Memory (PROM), magnetic memory, magnetic disk, or optical disk.

For example, visual information to be projected through the projector 160 may be stored in the memory 170.

The control unit 180 typically functions to control the overall operation of the mobile robot 100, in addition to an operation associated with the application program. The control unit 180 may provide appropriate information or an appropriate function to the user or process this information or function by processing a signal, data, information, and the like that are input or output through the above-mentioned constituent elements, by executing the application program stored in the memory 170, or by controlling the travel unit 130.

Under the control of the control unit 180, the power supply unit 190 receives external power or internal power and supplies it to each of the constituent elements included in the mobile robot 100. The power supply unit 190 may include a battery. The battery may be an internal battery or a replaceable battery.

At least some of the constituent elements may cooperatively operate to realize operations, controls, or control methods of the mobile robot 100 according to various practical examples described below. In addition, the operations, controls, or control methods of the mobile robot 100 may be realized on the mobile robot 100 by executing at least one application program stored in the memory 170.

In addition, various practical examples described below may be realized in a medium readable by a computer or similar device using, for example, software, hardware, or a combination of both.

Various practical examples associated with a method in which the mobile robot 100 according to the embodiment of the present disclosure marks a safety area for travel safety using the projector 160 are described below with the accompanying drawings.

FIG. 2 is a representative flowchart that is referenced to describe an operational method of the mobile robot 100 according to the present disclosure.

The operational method of the mobile robot 100, which is illustrated in FIG. 2, also applies to a case where the mobile robot 100 remains stationary after stopping during traveling. In addition, unless otherwise specified, the operational method of the mobile robot 100, which is illustrated in FIG. 2, may be performed by the control unit 180 (or a processor) of the mobile robot 100. In addition, each step of the flowchart in FIG. 2 may be realized by a program command that is executed by at least one processor.

With reference to FIG. 2, while the mobile robot 100 traveling, the mobile robot 100 may project the first visual information for marking the safety area onto the ground in the vicinity of the mobile robot 100 (10).

At this point, the expression 'while the mobile robot 100 travels' refers to both the duration during which the mobile robot 100 travels within a travel space and the case where the mobile robot 100 remains stationary after stopping during traveling. Therefore, once the mobile robot 100 starts a travel operation, the mobile robot 100 may externally project the first visual information for marking the safety area through the projector 160.

In addition, the first visual information serves as visual information for marking the safety area for the mobile robot 100 and may include text and/or an image. The text here may include a symbol, a letter, a number, a mark, and the like. The image here may include a dot, a line, a specific image, and a moving image. In addition, in practical examples described below, the first visual information may be described as being transformed into a first visual image, a visual image for marking the safety area, a visual image for marking an access restriction area, and other images.

In addition, projecting onto the ground in the vicinity of the mobile robot 100 may refer to projecting in the form of a beam onto the ground in the vicinity of the mobile robot 100 at the current position thereof, or projecting onto the wall surface or the ceiling instead of the ground in a case where a predetermined condition is satisfied.

According to a practical example, the safety area may refer to an access restriction area in the vicinity of the mobile robot 100, which is determined on the basis of the form of the mobile robot 100 and the travel state thereof. The access restriction area here may refer to a protection area for preventing the mobile robot 100 from colliding with an external object or refer to the surrounding area of the mobile robot 100. In this case, the first visual information may be at least one of the following: an image or text that marks a border of the access restriction area in a manner that is visually distinguished from the surroundings of the mobile robot 100.

The mobile robot 100 may project the first visual information for marking the safety area.

In this case, the first visual information may be an image in the form of a safety guide that alerts the surroundings of the mobile robots that access to the mobile robot 100 is restricted. That is, the first visual information serves as a line image for marking the access restriction area around the mobile robot 100, and may be an image for alerting a person or another moving body (for example, another robot) that access inside the safety guide is restricted.

In addition, the first visual information may be an image in the form of a safety guide, which reflects a current travel state of the mobile robot 100. For example, the current travel state of the mobile robot 100 and a current travel direction thereof may be reflected in the first visual information, and the resulting first visual information may be projected.

In addition, the first visual information may be an image in the form of a safety guide, which reflects a current operational state of the mobile robot 100. For example, as in the case where the mobile robot 100 is a product arrangement robot and is used with a cart being connected to the rear of the mobile robot 100, if the mobile robot 100 is used in a reconfigured state, this reconfigured state is reflected in the first visual information. Thus, when viewing only the front of the mobile robot 100, it can be intuitively recognized from the outside that the mobile robot 100 is used in the reconfigured state.

In addition, the first visual information may be an image in the form of a safety guide, which reflects the surrounding situation sensed by the mobile robot 100 through the sensing unit 140. For example, in a case where the ground slide, is sensed through a ground sensor of the mobile robot 100, this sensing result may be reflected in the first visual information, and the resulting first visual information may be projected. In addition, in a case where the mobile robot 100 senses a moving body approaching through the proximity sensor 141, the mobile robot 100 may reflect the sensed moving body in the first visual information and then project the resulting first visual information. Thus, the mobile robot 100 may alert its surroundings that the moving object approaching is sensed and that the safety guide is marked.

When the mobile robot starts the travel operation starts, the mobile robot 100 may activate the projector 160. In the activated state of the projector 160, the mobile robot 100 may project a visual image indicating the start of the travel operation. The mobile robot 100 may project the first visual information for externally marking the access restriction area onto the ground using one or more projectors 160 provided on the body thereof.

The control unit 180 of the mobile robot 100 may control the extent of rotation, movement, or tilting of the projector 160 to project the first visual information.

Next, after the first visual information is projected, the mobile robot 100 may determine that the safety area has been changed, based on at least one change in the travel state or the surrounding situation of the mobile robot 100 (20).

At this point, the expression 'the safety area has been changed' implies that the access restriction area around the mobile robot 100 is changed. For example, in a case where at least one of the following is changed: a travel speed, a travel direction, or a travel technique of the mobile robot 100, or where one or more objects approach the mobile robot 100 or move away therefrom, the access restriction area around the mobile robot 100 may be adaptively expanded, reduced, or changed in form.

In addition, the expression 'the safety area has been changed' implies that the alert for restricting access to the mobile robot 100 is changed. For example, the expression 'the safety area has been changed' may imply that a short separation distance between a moving obstacle and the mobile robot 100 is sensed and that a determination is made to change the color, thickness, and highlighting of the safety guide (or the safety area) in the direction of raising an alert level in such a manner as to prevent a collision. In addition, for example, the expression 'the safety area has been changed' may imply that a short separation distance between a moving obstacle and the mobile robot 100 is sensed and that a determination is made to restore the alert level of the safety guide (or the safety area) to the original level thereof.

In addition, the expression 'the safety area has been changed' implies that a projection area for the visual information for marking the safety area for the mobile robot 100 is changed. At this point, the expression 'the projection area is changed' means that any one of the following is changed: the position or the size of the projection area. For example, the expression 'the projection area is changed' may imply that, according to the surrounding situation sensed through the sensing unit 140, it is determined that it is not appropriate for the mobile robot 100 to project the visual image onto the ground in the vicinity of the mobile robot 100.

According to the determination that the safety area is changed in this manner, the mobile robot 100 may control the projector 160 in such a manner that the first visual information is changed in correspondence with the change (30).

The mobile robot 100 may control the rotation, movement, or tilting of the projector 160 to change the first visual information according to the change in the safety area.

According to a practical example, the first visual information may be changed to reflect the travel state and the surrounding situation of the mobile robot 100 in real time.

In addition, according to a practical example, the mobile robot 100 may vary the visual information in such a manner to visually distinguish between the change in the safety area, which corresponds to the change in the travel state, and the change in the safety area, which corresponds to sensing a change in the surrounding situation. Accordingly, it may also be recognized from the outside whether the mobile robot 100 changes the travel state of itself or senses a change in the external situation.

According to a practical example, the mobile robot 100 may make a determination in such a manner as to perform the next operation for safety according to changes in the travel state and/or the surrounding situation. In this case, the mobile robot 100 may control the operation of the projector 160 in such a manner that the next operation determined for safety is externally marked.

In this manner, according to the embodiment of the present disclosure, while traveling, the mobile robot 100 marks the safety area the projector 160. Furthermore, while traveling, the mobile robot adaptively varies the safety area according to the travel state and the surrounding situation of the mobile robot 100. Consequently, the travel safety can be ensured in a more reliable manner and can be quickly recognized from the outside.

Various practical examples in which the mobile robot 100 according to the embodiment of the present disclosure ensures the travel safety using the projector 160 are described in detail below with reference to the drawings.

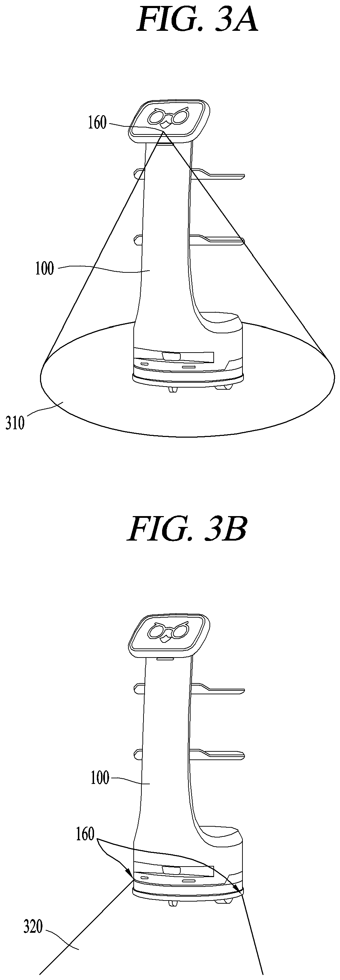

FIG. 3A to 3C are views illustrating various examples, respectively, where the mobile robot 100 according to the present disclosure externally marks the traveling-associated safety area.

While traveling, the mobile robot 100 according to the present disclosure changes the visual information ("the first visual information') for marking the safety area in a manner that adjusts according to the travel state of the mobile robot 100 and the sensed surrounding situation thereof and may project the changed visual information onto the ground in the vicinity of the mobile robot 100.

According to a practical embodiment, the safety area may be the access restriction area determined on the basis of the form and travel state of the mobile robot 100. The access restriction area constitutes a surrounding area of the mobile robot 100 and refers to an area or space where safety is ensured while the mobile robot 100 travels.

The mobile robot 100 externally marks the access restriction area in such a manner that a moving object (for example, another robot or a person) in motion is prevented from accessing or entering the access restriction area. To this end, by controlling the projector 160, the mobile robot 100 may project at least one of the following as the first visual information: an image or text for marking the safety area in a manner that is visually distinguished from the surroundings of the mobile robot 100.

The size and the shape of the access restriction area may vary according to the form of the mobile robot 100. In addition, the size and the shape of the access restriction area may vary according to the travel speed and travel direction of the mobile robot 100. In addition, the size and the shape of the access restriction area may vary according to a change in the surrounding situation that is sensed by the mobile robot 100.

The first visual information may be an image for marking a border between the access restriction area and an area outside the access restriction area.

Specifically, the first visual information may be an image for marking only the border or be an image in which color is applied to the entire access restriction area. Alteratively, the first visual information may include text that accompanies or defines the border to be marked. However, these are just examples of the first visual information. Any image or text that allows the border of the access restriction area, indicating the safety area, to be intuitively recognized from the outside may sufficiently serve as the first visual information.

For example, FIGS. 3A and 3B are views each illustrating an example where the first visual information for marking the safety area for the mobile robot 100 is projected in the form of a guide line indicating the border of the access restriction area. In the illustrated guide line, an area that faces toward the center of the mobile robot 100 is the access restriction area.

FIG. 3A illustrated that the projector 160 constitutes the upper end portion of the mobile robot 100. The projector 160 of the mobile robot 100 illustrated in FIG. 3A may move, rotate, or tilt under the control of the control unit 180.

Accordingly, a border guide line 310 for marking the safety area in the range of 360 degrees in the vicinity of the mobile robot 100 may be projected.

As another practical example, a designated colored image may be projected onto an area inside the border guide line 310 illustrated in FIG. 3A. The designated colored image here may reflect an operating state the mobile robot 100 and the travel state thereof.

For example, before the mobile robot 100 starts to travel, the projector 100 may be activated, and a colored image in a designated pattern, which indicates that the safety area is markable, may be projected onto an area inside the guide line 310. For example, a colored image that matches the travel states, such as the travel speed and travel direction of the mobile robot 100, may be projected onto an area inside the guide line 310. For example, a colored image that matches a state, such as the remaining power of a battery in the mobile robot 100, may be projected onto an area inside the guide line 310. In this case, not only can the travel safety of the mobile robot 100 be ensured, but information relating to the states of the mobile robot 100, such as the operating state and the travel state, can also be visually perceived.

FIG. 3B illustrates that the projector 160 constitutes the lower end portions of the mobile robot 100. Specifically, a safety guide 320 for marking the access restriction area may be projected through the projector 160, which constitutes the lower end portion of the mobile robot 100 in FIG. 3B and is provided, for example, on the upper end of the travel unit 130. The safety guide 320, as illustrated in FIG. 3B, may be a plurality of line images that are projected onto both sides, respectively, of the travel unit 130 in a manner that is elongated toward the scheduled travel direction of the mobile robot 100.

As another practical example, a gap between a plurality of line images included in the safety guide 320 may be determined after reflecting the operating state and the travel state of the mobile robot 100. For example, a gap between the line images may decrease or increase according to a current travel speed of the mobile robot 100.

In addition, as another practical example, the gap between the plurality of line images included in the safety guide 320 illustrated in FIG. 3B may vary as a result of reflecting information relating to the surrounding situation sensed by the mobile robot 100. For example, in a case where a traveling area that matches the travel direction of the mobile robot 100 is sensed as an attention section or where an object approaches, the travel safety can be further ensured by increasing the gap between the plurality of line images.

FIG. 3C illustrates that a plurality of projectors 160 is positioned at the front and rear of the mobile robot 100. At this point, the positions of the plurality of projectors 160 are not limited and are not illustrated in FIG. 3C. In this case, the safety area 330 in the vicinity of the mobile robot 100 may be marked through different projectors 160 provided in such a manner as to indicate different risk levels.

For example, in the safety area 330 marked through the plurality of projectors 160, a front area (a) matching a front surface in the travel direction of the mobile robot 100 is marked in such a manner as to indicate a high risk level, and a lateral area (b) matching a lateral surface in the travel direction may be marked to indicate a medium risk level. In addition, a rear area (c) matching a rear surface in the travel direction of the mobile robot 100 may be marked in such a manner as to indicate a low risk level.

The reason for this is that, for example, in a case where the mobile robot 100 travels straight forward, as the mobile robot 100 travels, the front area (a) is an area through which the mobile robot 100 passes, the lateral area (b) is a partially overlapping area, and the rear area (c) is an area that only becomes increasingly remote from the mobile robot 100 without overlapping. For example, in this manner, the safety area suitable for a direction in which an object approaches the mobile robot 100 may be marked by dividing the safety area into sub-areas by the travel direction of the mobile robot 100 and marking the sub-areas.

However, this division into the sub-areas may be changed in a manner that matches a change in the travel direction of the mobile robot 100. For example, in a case where the mobile robot 100 rotates in place, a projection image may be projected in such a manner that the front area (a), the lateral area (b), and the rear area (c), which are described above, all have a high risk level.

The guide line 310, the safety guide 320, and the safety area 330, illustrated in FIGS. 3A to 3C, which are marked on the ground while the mobile robot 100 travels, as described in more detail below, may be changed based on at least one change in the travel state or the surrounding situation of the mobile robot 100.

In addition, although not illustrated, while the mobile robot 100 projects the visual information for marking the safety area through the projector 160, or before or after the mobile robot 100 projects the visual information, the mobile robot 100 may control operations of other constituent elements, for example, a display unit 151, a sound output module 152, and the camera 121, to ensure the travel safety.

For example, while the mobile robot 100 projects the visual information, or before or after the mobile robot 100 projects the visual information, the mobile robot 100 may monitor the surrounding situation through the camera 121 and may output sound, text information, and the like for ensuring the safety, through the sound output module 152 and the display unit 151, respectively.

At this point, the visual information projected through the projector 160 may be varied in various ways to increase, maintain, or decrease a travel safety level based on the result of the monitoring by the camera 121. For example, the mobile robot 100 may control the operation of the projector 160 in such a manner that the visual information is projected in a manner that varies in size, shape, position, color, flickering effect, and the like.

As described above, the mobile robot 100 according to the embodiment of the present disclosure may project in various shapes the visual information for ensuring the travel safety, through the provided projector 160. Furthermore, the mobile robot 100 may vary the visual information, which is to be projected, in such a manner as to reflect the safety area that is changed according to the travel state and the surrounding situation of the mobile robot 100.

Practical examples where the visual information for marking the safety area is changed according to the travel speed of the mobile robot 100 are described in detail below.

(a), (b), and (c) of FIG. 4 are views, respectively, that are referenced to describe a method of marking the safety area in a manner that varies with the travel speed of the mobile robot 100 according to the present disclosure.

First, in the embodiment of the present disclosure, the expression 'while the mobile robot 100 travels' implies that the mobile robot 100 travels at a low or high speed after starting to operate and that the mobile robot 100 comes to a stop after starting to operate.

In the practical examples described below, the term 'first visual information' for marking the access restriction area, which is projected onto the ground in the vicinity of the mobile robot 100, is used interchangeably with 'safety area.' Therefore, in a case where the restriction of access to the mobile robot 100 needs to be stricter (or in a case where the risk level is raised), the size of the safety area projected onto the ground in the vicinity of the mobile robot 100 may be increased. In contrast, in a case where the restriction of access to the mobile robot 100 is flexible (or in a case where the risk level is lowered), the size of the safety area projected onto the ground in the vicinity of the mobile robot 100 may be decreased or be maintained at the same as when the mobile robot 100 remains stationary.

In the stationary state of the mobile robot 100, only the minimum safety area needs to be sufficiently ensured. When the mobile robot 100 travels at a low speed, there is a need to vary the safety area in such a manner as to be larger than the minimum safety area. In addition, when the mobile robot 100 travels at a high speed, the travel safety needs to be ensured by externally marking the maximum safety area. Ensuring the travel safety is conceptually similar to understanding a braking distance required of a traveling vehicle.

For example, the higher the travel speed of the mobile robot 100, the greater the braking distance required when a nearby object is sensed. This increases the likelihood of a collision with the nearby object. Therefore, in a case where the mobile robot 100 travels at a high speed, the size of the safety area needs to be marked larger to ensure the travel safety. In contrast, in a case where the mobile robot 100 travels at a low speed, the likelihood of a collision is low, and the braking distance is correspondingly short when an object is sensed. Thus, the size of the safety area may be sufficiently small.

The control unit 180 of the mobile robot 100 may control the operation of the projector 160 in such a manner that the safety area is changed, based on the travel speed of the mobile robot 100 sensed through the sensing unit 140.

The control unit 180 of the mobile robot 100 may compute the distance of the safety area based on the sensed travel speed and control the operation of the projector 160 on the basis of the computed distance of the safety area in such a manner that the first visual information is changed. Specifically, the control unit 180 may control the projector 160 in such a manner that at least one of the following varies on the basis of the distance of the safety area computed according to the travel speed of the mobile robot 100: the size, the position, or the shape of the access restriction area corresponding to the first visual information.

As illustrated in (a), (b), and (c) of FIG. 4, in a stationary state (a) of the mobile robot 100, a first access restriction area 410 determined in correspondence with a travel speed of '0' is projected as the varied first visual information. In addition, in a low-speed state (b) that reflects the travel speed of the mobile robot 100, a second access restriction area 420 determined in correspondence with low-speed traveling is projected as the varied first visual information. Moreover, when the travel speed of the mobile robot 100 is in a high-speed state (c), a third access restriction area 430 determined in correspondence with high-speed traveling is projected as the varied first visual information.

The first to third access restriction areas 410, 420, and 430 have areas of different sizes. Specifically, the size of the first restriction area 410 is the smallest, and the size of the third restriction area 430 is the largest.

In addition, the first to third restriction areas 410, 420, and 430 may be marked as different colored images. At this point, the colored images may be in different colors designated in such a manner to indicate the magnitude of the travel speed of the mobile robot 100. For example, the first access restriction area 410 matching the stationary state (a) may be green in color. In addition, for example, the second access restriction area 420 matching the low-speed state (b) may be yellow in color. In addition, for example, the third access restriction area 430 matching the high-speed state (c) may be red in color. In this manner, by applying a matched projection color that varies according to the travel speed of the mobile robot 100, it can be intuitively recognized from the outside whether or not the mobile robot 100 travels at a high speed.

As the travel speed of the mobile robot 100 is changed, the first visual information is projected after being changed in a manner that is adapted to any one of the first and to third access restriction areas 410, 420, and 430.

In addition, according to a practical example, in a case where the visual information is changed to reflect the transition from the second access restriction area 420 to the third access restriction area 430, an effect such as flickering may be added in such a manner that the change in the safety area is recognized from the outside. For example, in the above-mentioned color application example, the color of the second restriction area 420 is first turned red. Then, after the flickering effect applies to the second restriction area 420, the transition may take place from the second restriction area 420 to the third access restriction area 430. In addition, after the transition to the third access restriction area 430, a red-colored image may maintain the flickering effect for a predetermined time (for example, 2 to 3 seconds), thereby alerting the surroundings of the mobile robot 100 to the likelihood of a collision.

A method of computing a distance D of the safety area that varies with the current travel speed of the mobile robot 100 is as follows.

This is a mathematical equation for computing the safety area for the mobile robot 100 by reflecting the current travel speed of the mobile robot 100. In the following mathematical equation, Vcurrent represents a current travel speed of the mobile robot 100, Vlow represents a travel speed defined as a low-speed state, and Vhigh represents a travel speed defined as a high-speed state.

$$D = D_{low} + (D_{high} - D_{low}) * (V_{current^2} - V_{low^2}) / (V_{high^2} - V_{low^2})$$

In addition, in the mathematical equation, Dlow represents a distance of the safety area in the low-speed state, and Dhigh represents a distance of the safety area in the high-speed state. Specifically, Dlow represents a protective deceleration area and a protective stop area that match a travel speed of 0.5 m/s or lower at a travel speed of 0.25 m/s or lower that varies according to a type of the provided proximity sensor 141. In addition, Dhigh represents a protective deceleration area and a protective stop area that match a travel speed of 0.95 m/s or higher.

When an obstacle is sensed through the proximity sensor 141, as one expected operation, the mobile robot 100 may reduce the current travel speed and then come to a stop. In this case, a section where the mobile robot 100 reduces the travel speed may correspond to the protective deceleration area, and a section where the mobile robot 100 comes to a stop may correspond to the protective stop area.

The protective deceleration area and the protective stop area for the mobile robot 100 may vary according to the type of the provided proximity sensor 141 and the current travel speed of the mobile robot 100.

For example, the travel speed of the mobile robot 100 is sensed as follows, using a Lidar. When using the Lidar, for example, the low-speed state may represent 0.5 m/s or lower, and the high-speed state may represent 0.95 m/s or higher. In this case, in the low-speed state, the protective deceleration area may represent 0.245 m to 0.745 m, and the protective stop area may represent 0.245 m or lower. In addition, in the high-speed state, the protective deceleration area represents 0.4 m to 1.25 m, and the protective stop area may represent 0.4 m or lower.

When using the Lidar, the distance D of the safety area that varies with the current travel speed is computed through the above mathematical expression. From this expression, it can be inferred that the distance D is changed in proportion to the square of the travel speed of the mobile robot 100.

In addition, for example, the travel speed of the mobile robot 100 is sensed as follows, using a TOF sensor. At this point, the TOF sensor serves as a front central sensor of the mobile robot 100. For example, it is assumed that the surrounding situation can be sensed within a range of 79 to 111 degrees. When using the TOF sensor, for example, the low-speed state may represent 0.25 m/s or lower, and the high-speed state may represent 0.95 m/s or higher. In this case, in the low-speed state, the protective deceleration area represents 0.25 m to 0.75 m and the protective stop area may represent 0.25 m. In addition, in the high-speed state, the protective deceleration area represents 0.4 m to 1.25 m, and the protective stop area may represent 0.4 m or lower.

When using the TOF sensor, the distance D of the safety area that varies with the current travel speed is also computed through the above mathematical expression. From this expression, it can also be inferred that the distance D is changed in proportion to the square of the travel speed of the mobile robot 100.

In this manner, the first visual information, which indicates the distance D of the safety area that varies with the current travel speed, may be set to be equal to or greater than at least the protective deceleration area. Furthermore, the first visual information may be changed to have the same size as the protective stop area when the travel speed is reduced. Consequently, the first visual information is reduced in size.

According to a practical example, based on the current travel speed being sensed through the sensing unit 140 of the mobile robot 100, the control unit 180 may perceive the sensed travel speed as a change in the travel state of the mobile robot 100 and thus determine the change in the safety area. The control unit 180 may control the projector 160 in such a manner as to change at least one of the following: a color or a size of the first visual information projected according to this determination.

In addition, according to a practical image, an image size of the first visual image that is projected may increase or decrease in correspondence with the sensed travel speed. An image color of the first visual information may change in such a manner that a warning level varies in correspondence with the sensed travel speed.

As described above with reference to (a), (b), and (c) of FIG. 4, in a case where the mobile robot 100 changes to the stationary state, the low-speed state, and then the high-speed state in this order, the image size of the first visual information gradually increases. When the sequence is reversed, the image size of the first visual information gradually decreases.

In addition, in a case where, in (a), (b), and (c) of FIG. 4, the mobile robot 100 changes to the stationary state, the low-speed state, and then the high-speed state in this order, the color image of the first visual information may change in the direction of increasing the warning level (for example, green -> yellow -> red). When the sequence is reversed, the color image of the first visual information may be changed in the direction of maintaining or decreasing the warning level.

(a) and (b) of FIG. 5 and (a) and (b) of FIG. 6 are exemplary views that are referenced to describe a method in which the mobile robot 100 according to the present disclosure marks the safety area in a manner that varies according to the travel direction.

In the practical examples in (a), (b), and (c) of FIG. 4, the size and/or the color of the first visual information for marking the safety area that varies according to the travel speed of the mobile robot 100 is changed. Consequently, the mobile robot 100 operates in such a manner that the change in the travel state thereof can be recognized from the outside. In this case, the distance D of the safety area is illustrated in such a manner as to be the same at any point from the center of the mobile robot 100.

The likelihood of a collision or the risk level within the safety area actually varies according to the current travel direction and or the travel technique of the mobile robot 100. For example, in a case where the mobile robot 100 travels forward, in the safety area marked by the first visual information, the risk level is high in front of the mobile robot 100 and is low to the sides or behind the mobile robot 100. In addition, for example, in a case where the mobile robot 100 travels in a circle, the risk level is high inward from the rotation direction and low outward from the rotation direction.

Accordingly, practical examples where the safety area is projected in a manner that varies in shape by applying the risk level that varies with the travel direction and the travel technique of the mobile robot 100 are described with reference to (a) and (b) of FIG. 5 and (a) and (b) of FIG. 6.

Specifically, (a) of FIG. 5 illustrates that, in a case (a) where the mobile robot 100 counterclockwise rotates, the first visual information is projected after changing the form of the safety area. (b) of FIG. 5 illustrates that, in a case (b) where the mobile robot 100 clockwise rotates, the first visual information is projected after changing the form of the safety area.

In the case (a) where the mobile robot 100 counterclockwise rotates, the risk level is raised in the area on the left side of the mobile robot 100, which is positioned inward in the counterclockwise direction. This is because the mobile robot 100 moves while changing the left-side direction of itself to the direction of progression. In contrast, while the mobile robot 100 counterclockwise rotates, the risk level is low in the area on the left side of the mobile robot 100 and is approximately the same as the risk level behind the mobile robot 100. Therefore, a first visual information 510, in which the left side of the safety area is reconfigured to be wide and elongated with respect to the front of the mobile robot 100, is projected.

In the case (b), where the mobile robot 100 clockwise rotates, the risk level is raised in the area on the right side of the mobile robot 100, which is positioned inward in the clockwise direction. This is because the mobile robot 100 moves while changing the right-side direction of itself to the direction of progression. In contrast, while the mobile robot 100 counterclockwise rotates, the risk level is low in the area on the left side of the mobile robot 100 and is approximately the same as the risk level behind the mobile robot 100. Therefore, a first visual information 520, in which the right side of the safety area is reconfigured to be wide and elongated with respect to the front of the mobile robot 100, is projected.

According to a practical example, before the mobile robot 100 travels in a circle, the control unit 180 of the mobile robot 100, as illustrated in (a) and (b) of FIG. 5, may project a visual image (for example, an arrow image in a rotational direction), which indicates a rotational direction, through the projector 160. Thus, a scheduled rotational direction can be pre-perceived from the outside.

(a) and (b) of FIG. 6 each illustrate an example where, while the mobile robot 100 travels forward, the first visual information is projected after changing the form of the safety area according to the travel direction.

In a case where, as in (a) of FIG. 6, the mobile robot 100 travels forward with respect to the front of the mobile robot 100, the risk level is raised in the area in front of the mobile robot 100, which is positioned in the direction of progression. In contrast, as in (b) of FIG. 6, the mobile robot 100 travels backward with respect to the front of the mobile robot 100, the risk level is raised in the area behind the mobile robot 100, which is positioned in the direction of progression.

In this case, the control unit 180 of the mobile robot 100 may project the first visual information, in which a portion of the safety area that matches the travel direction of the mobile robot 100 is reconfigured to be wide and elongated.

For example, when the mobile robot 100, as (a) of FIG. 6, travels forward, an image 610 of the safety area, in which the area in front of the mobile robot 100 is reconfigured to be wide and elongated, is projected onto the ground in the vicinity of the mobile robot 100. In addition, for example, when the mobile robot 100, as (b) of FIG. 6, travels backward, an image 620 of the safety area, in which the area behind the mobile robot 100 is reconfigured to be wide and elongated, is projected onto the ground in the vicinity of the mobile robot 100.

In a practical example, through the sensing unit 140, the mobile robot 100 may sense the current travel direction of the mobile robot 100 or sense the surrounding situation to determine the change in the travel direction. The control unit 180 of the mobile robot 100 may control the projector 160 in such a manner that an image shape of the first visual information for marking the safety area is elongated toward the sensed travel direction while the mobile robot 100 travels.

The image form of the safety area, which changes with a change in the travel technique and the travel direction of the mobile robot 100, applies and varies in real time according to the sensed current travel direction. For example, as illustrated in (a) and (b) of FIG. 5 and (a) and (b) of FIG. 6, images 610 and 620 of the safety area that vary with the travel technique and the travel direction of the mobile robot 100 may be projected in a seamlessly varying manner while the mobile robot 100 travels. The safety area may be marked visually as if a shadow were formed in the vicinity of the mobile robot 100.

In a practical example, the length of the image form of the safety area, which is elongated toward the travel direction of the mobile robot, may be determined after reflecting the travel speed of the mobile robot 100.

For example, when the travel speed of the mobile robot 100 is in the high-speed state (c), a portion of the safety region, which is positioned toward the travel direction, may be reconfigured to be further elongated, and the resulting safety area may be marked. In addition, for example, when the travel speed of the mobile robot 100 is in the low-speed state (b), a portion of the safety area, which is positioned toward the travel direction, may be reconfigured to have a shorter length than in the high-speed state (c), and the resulting safety area may be marked. Accordingly, a feeling of the speed in the travel direction of the mobile robot 100 may be visually perceived by observing the image of the safety area, which is projected through the projector 160.

The objective of the image of the safety area, which is projected through the projector 160 of the mobile robot 100 is to ensure the travel safety. Therefore, while the mobile robot 100 travels, the marking of the safety area for ensuring the travel safety may be changed according to the sensed surrounding situation, for example, a state of a sensed obstacle, and the resulting safety area may be marked.

In this context, FIG. 7 is a view that is referenced to describe how the safety area is marked in a varied manner when an obstacle approaches the mobile robot 100.

At this point, obstacles include all objects that have a likelihood of collision while the mobile robot 100 travels within the travel space. However, in the present specification, a description is provided on the assumption of movable objects, such as a person, an animal, and another moving body.

While traveling, the mobile robot 100 may sense a nearby obstacle through the sensing unit 140, for example, the proximity sensor 141 or the camera 121 and monitor the state of the sensed nearby obstacle. At this point, the expression 'monitoring the state of the sensed nearby obstacle' refers to monitoring the direction in which the sensed nearby obstacle moves toward or away from the mobile robot 100, information on the relative position of the nearby obstacle, and a gaze area in the case of a person. In addition, in a practical example, the mobile robot 100 may also sense the relative position of another nearby robot by communicating with the nearby robot through the communication unit 110.

In this manner, when the presence or state of an obstacle to the mobile robot 100 is sensed, the control unit 180 may control the projector 160, based on the sensed obstacle approaching the mobile robot 100, in such a manner that the first visual information being projected varies according to the state of the sensed obstacle.

Specifically, in a case where an obstacle approaches the mobile robot 100, the mobile robot 100 may project the first visual information after reconfiguring the first visual information in a manner that corresponds to the state of the sensed obstacle.

For example, when an obstacle approaches the mobile robot 100, the mobile robot 100 checks a gaze area of the obstacle through the camera 121. Then, the mobile robot 100 may change the position of the projection area or the color of the visual information in such a manner that the visual information is not directly projected within the field of view that includes the obstacle, and may project the resulting visual information.

In addition, for example, when an obstacle approaches the mobile robot 100, the mobile robot 100 may change the color or the size of the visual information in such a manner that the marking of the access restriction area is visually emphasized according to the moving state of the obstacle, and may project the resulting visual information.

In addition, for example, according to the type of obstacle approaching the mobile robot 100, the mobile robot 100 may change the color or the size of the visual information in such a manner as to guide a specific operation of the obstacle.

At this point, types of obstacles include other robots that are unable to communicate with the mobile robot 100 and those that are initially able to communicate, but are currently unable to communicate due to communication failure or similar issues. In a case where another robot is able to communicate with the mobile robot 100, it is possible for them to avoid a collision through mutual communication.

When a nearby obstacle is sensed, the mobile robot 100 may reduce the travel speed or avoid the nearby obstacle by traveling around the nearby obstacle. However, in a case where it is impossible to travel around the nearby obstacle or where the braking distance increases although the travel speed is reduced, the access risk may be actively marked externally to ensure the travel safety, thereby guiding an operation for avoiding the risk.

For example, as illustrated in FIG. 7, it is assumed that the mobile robot 100 senses another robot 200 that approaches the mobile robot 100, while the mobile robot 100 projects the first visual image 710 for marking the safety area during traveling. Then, as one operation thereof, the mobile robot 100 may reduce the travel speed and then travel around an obstacle by monitoring a state (moving direction) of the robot 200.

In addition, as another operation thereof, the mobile robot 100 may project a second visual image 720, which expands the safety area toward a direction in which the robot 200 approaches the mobile robot 100. Thus, the robot 200 may visually perceive the second visual image 720 and be guided to avoid a collision. At this point, the second visual image 720 may be a predetermined color image or color pattern that is perceivable through a camera of the robot 200.

In this case, when the projector 160 is also mounted to the robot 200, the robot 200 may project responsive visual information indicating that the second visual image 720 projected by the mobile robot 100 is perceived. Since the robot 200 travels around the mobile robot 100, the mobile robot 100 may continue traveling without concern about a collision instead of reducing the travel speed.

In this manner, the mobile robot 100 according to the embodiment of the present disclosure may ensure the safety area through the visual image projected through the projector 160 while the mobile robot 100 travels. Furthermore, the mobile robot 100 and the nearby robot 200 may recognize each other without communication between them. In addition, the mobile robot 100 and the robot 200 may perceive each other's next operation for the travel safety without communication between them.

Specifically, when the mobile robot 100 senses the nearby robot 200 through the sensing unit 140 or the camera 121 while traveling, the mobile robot 100 changes the visual image for ensuring safety, which is projected through the projector 160, into a designated color or pattern that can be recognized by the robot 200. At this point, in a case where the robot 200 also includes a projector and marks a safety area for the robot 200, the mobile robot 100 may visually recognize an image projected by the robot 200, through the camera 121 and easily perceive a travel state (a travel direction and a travel speed) of the robot 200. The mobile robot 100 may determine the next operation on the basis of the perceived travel state of the robot 200 and reflect the determined next operation in the visual image projected through the projector 160. At this point, the determined next operation may be one of the following: guiding the robot 200 to travel around the mobile robot 100 or having the mobile robot 100 travel around the robot 200. The robot 200 may perceive the next operation, determined by the mobile robot 100, through visual identification, and accordingly perform an operation of itself (traveling around the mobile robot 100 or traveling as planned without reducing speed).

In this manner, by using the visual image for marking the safety area, it is possible for the mobile robot 100 and the robot 200 to perceive each other in a case where communication between them is not possible or even in an area where communication is impossible. Furthermore, the mobile robot 100 may alert the surroundings of the mobile robot 100 to the scheduled next operation. Accordingly, the mobile robot 100 can effectively deal with the robot 200 to prevent a collision or a similar accident, and a manager can visually anticipate the next operation of the mobile robot 100.

In addition, according to a practical example, when projecting the visual image for marking the safety area, the mobile robot 100 may reflect state information (for example, an abnormal state, an insufficient remaining battery power, communication unavailability, or a similar condition) of itself, associated with the travel safety, in the visual image to be projected. For example, when an abnormal state of the mobile robot 100 is found, text or a symbol indicating the abnormal state may be added within the visual image to be projected. Accordingly, by checking the state of the mobile robot 100, the manager of the mobile robot 100 or a similar operator may intuitively determine whether the state of the mobile robot 100 is normal or abnormal.

The form of the mobile robot 100 according to the embodiment of the present disclosure may be changed and used in accordance with the intended purpose of the mobile robot 100.

For example, the shapes of a serving robot designed for serving customers and a guiding robot designed for guiding guests are predetermined. However, a product arrangement robot designed for storing, searching for, and moving products may be used with another moving body, for example, a cart being connected to the rear thereof. In this case, the safety area for the mobile robot 100 whose form has been changed may also need to be changed.

In this context, FIGS. 8A and 8B are exemplary views, respectively, that are referenced to describe a change in the marking of the safety area, which varies with a change in the form of the mobile robot 100 according to the present disclosure.

As described above, in a case where the mobile robot 100, like the product arrangement robot, is used with a cart or the like being connected to the rear thereof, the cart connected to the rear thereof may collide with the robot 200 or a person when the mobile robot 100 travels in a circle or changes the travel direction. The reason for this is that, when viewed from the front of the mobile robot 100, it is not possible to check whether or not a cart is connected to the rear of the mobile robot 100.

Accordingly, when a signal ('connection signal'), indicating that a cart is connected to the rear of the mobile robot 100, is received through the sensing unit 140 or the input unit 120, the control unit 180 of the mobile robot 100 may control the projector 160 on the basis of the received connection signal in such a manner as to change the visual image for marking the safety area.

At this point, changing the visual image to be projected on the basis of the received connection signal means expanding the size of an area onto which the visual image is projected or changing the shape of the visual image to be projected. Consequently, by observing only the visual image projected onto the ground in front of the mobile robot 100, a moving object approaching from in front of the mobile robot 100 may easily ascertain whether or not a cart is used while connected to the rear of the mobile robot 100.

In addition, the connection signal indicating that a cart is connected to the rear of the mobile robot 100 may be generated by a sensing value from a sensor provided on the mobile robot 100 when the cart is connected thereto or be generated on the basis of input from the manager or a similar operator.

In a case where the cart is disconnected from the mobile robot 100, the control unit 180 of the mobile robot 100 may receive through the sensing unit 140 or the input unit 120 a signal ("disconnection signal') indicating that the cart is disconnected from the mobile robot 100. The control unit 180 may control the projector 160 on the basis of the received disconnection signal in such a manner that the visual image for marking the safety area is restored to the original state thereof.

At this point, restoring the visual image to be projected to the original image thereof on the basis of the received disconnection signal means restoring the size of an area onto which the visual image is projected to the original size thereof or restoring the shape of the visual image to the previous shape thereof.

In addition, the disconnection signal indicating that the cart is disconnected from the mobile robot 100 may be generated by the sensing value from the sensor provided on the mobile robot 100 or be generated on the basis of input from the manager or a similar operator.

In this manner, in a case where the usage or operational form of the mobile robot 100 according to the embodiment of the present disclosure is used or operates is changed by connecting a cart or the like to the mobile robot 100, the mobile robot 100 may recognize this change on the basis of the received signal. Then, the mobile robot 100 may accordingly project the visual information after reflecting the change in the visual information for marking the safety.

According to a practical example, the control unit 180 of the mobile robot 100 may sense another moving body connected to a connection member of the mobile robot 100 on the basis of the received signal and control the projector 160, based on information on the moving body, in such a manner that the first visual information is projected after being changed.

At this point, the connection member of the mobile robot 100 may be positioned on one side of the body of the mobile robot 100, for example, on the rear of the mobile robot 100 and be coupled to a connection member provided on the moving body (for example, a cart). At this point, a sensor may be mounted to the connection member of the mobile robot 100 and generate a signal for sensing whether the moving body is connected or disconnected.

In addition, as another practical example, the control unit 180 of the mobile robot 100 may perceive the number of connected moving bodies, as information on the moving bodies connected to the mobile robot 100. The number of connected moving bodies may be perceived by receiving a signal corresponding to the presence of another moving body connected to each of the moving bodes through input from the manager or a similar operator or through a sensor or the like provided on each of the moving bodies. However, the control unit 180 of the mobile robot 100 may acquire information on the number of connected moving bodies through other methods that are not disclosed in the present disclosure.

When the information on the number of connected moving bodies is checked in this manner, the control unit 180 of the mobile robot 100 may change at least one of the following: the size or the shape of the visual image. The control unit 180 may then project the resulting visual image.

For example, when the number of moving bodies connected to the mobile robot 100 is great, the size of each image may be expanded. In addition, for example, when the number of moving bodies connected to the mobile robot 100 is great, the visual image may be changed or text may be added in such a manner as to indicate the number of connected moving bodies. The reason for this is that, in a case where the moving body is connected to the rear of the mobile robot 100, the areas on the sides of the mobile robot 100 and the area behind the mobile robot 100 become risk areas that requires attention, unlike when the mobile robot 100 is used alone.

In addition, in a practical example, the control unit 180 of the mobile robot 100 may control the projection by the projector 160 on the basis of the information on the number of connected moving bodies in such a manner that the current travel speed and the travel direction of the mobile robot 100 are reflected in the visual image to be changed.

FIGS. 8A and 8B illustrate different examples, respectively, where, while the mobile robot 100 operates with three carts being connected to the rear thereof, the visual image for marking the safety area is projected onto the ground in front of the mobile robot 100 after being changed.

Specifically, FIG. 8A illustrates an example where as many guide lines 810, indicating access restriction, are projected onto the ground in front of the mobile robot 100 as there are moving bodies 850 connected to the rear of the mobile robot 100. In FIG. 8A, with the number of projected guide lines 810, a corresponding number of connected moving bodies (three connected moving bodies) may be reliably perceived from in front of the mobile robot 100.

As another example, FIG. 8B illustrates an example where as many visual images 820, expanded by expanding the size of the access restriction area, are projected onto the ground in front to the mobile robot 100 as there are the moving bodies 850 connected to the rear of the mobile robot 100. In FIG. 8B, the number of moving bodies 850 connected to the rear of the mobile robot 100 cannot be immediately identified from in front of the mobile robot 100, but a nearby object can exercise more caution based on the size of the expanded safety area.

In this manner, the mobile robot 100 may reflect not only the safety area, which varies according to the travel state of itself, but also caution, which must be taken by the connected moving body 850, in the visual image to be projected. Thus, the robot 200 that travels or the manager can pass through the travel space without concern about a collision with the moving body 850.

In a case where the mobile robot 100 operates with the moving body 850 being connected thereto, the visual image for marking the safety area may be changed on the basis of whether or not a load is present on the connected moving body 850 and/or on the basis of an estimated amount of the load.

At this point, the load present on the connected moving body 850 and the estimated amount of the load may be sensed through a sensor included in each mobile body, for example, a load sensor and be transmitted to the mobile robot 100.

According to a practical example, the control unit 180 of the mobile robot 100 may expand the size of the visual image indicating the access restriction area or additionally change the shape thereof on the basis of the load present on the moving body 850 connected to the mobile robot 100 or the amount of the load.

The reason for this is that, when the mobile robot 100 travels with a load being present on the moving body 850 connected to the mobile robot 100, there is a need to externally mark the safety area in a further expanded manner considering the likelihood that the load present on the moving body 850 will fall off due to the travel state of the mobile robot 100.

In this context, FIGS. 8C and 8D are exemplary views, respectively, that are referenced to describe a change in the marking of the safety area based on information on the amount of the load present on the moving body 850 connected to the mobile robot 100 according to the present disclosure.

According to a practical example, the control unit 180 of the mobile robot 100 may receive information on the amount of the load present on each moving body 850 (for example, a cart), as information on the connected moving body 580. At this point, the information on the amount of the load may be sensed through the load sensor provided on each moving body 850. Subsequently, the control unit 180 of the mobile robot 100 may estimate (or compute) the access restriction area around the entire modified mobile robot 100 based on the received information on the amount of the load and change at least one of the following: the size or the shape of the visual image to be projected, in such a manner as to mark the estimated access restriction area.

At this point, in a case where a plurality of load sensors is provided on each moving body 850, a position at which the load is present may be ascertained.

For example, a load is present in a manner that is lean to the left side, with the load sensors being provided on both lateral surfaces, respectively, of the moving body 850. In this case, it may be determined through a difference between measurement values from the load sensors on both lateral surfaces that the load on the moving body 850 is present in a manner that is indeed lean 'to the left side.'

In this case, while the mobile robot 100 travels, the visual image may be projected after expanding the size of the safety area for the travel safety. Alternatively, the visual image may be projected after changing the shape of the visual image in such a manner that a portion of the visual image, which corresponds to the left-side surface of the mobile robot 100, is further expanded.

For example, as illustrated in FIG. 8C, in a case where various carts 860 having different shapes are connected to the rear of the mobile robot 100, loads present on the connected carts 860 may be sensed using at least two of the following: the sensing unit 140 and the communication unit 110 of the mobile robot 100, sensors provided on the connected carts 860, or inputs from the manager. Thus, an expanded safety area 830 may be projected.

In addition, for example, as illustrated in FIG. 8D, when the mobile robot 100 travels with different loads being present on carts 870, which have the same shape and are connected to the rear of the mobile robot 100, the mobile robot 100 may additionally change the shape of the expanded safety area 830 on the basis of the amount of the load and the relative position of the load, and mark the resulting safety area 830.

In accordance with the purpose of using the mobile robot 100, the mobile robot 100 is used with the moving body 850 being connected to the rear of the mobile robot 100. In this case, pieces of information such as the presence of the moving body 850, the number of connected moving bodies 850, and the loads present on the moving bodies are included in the visual image for the safety area, which is projected onto the ground in front of the mobile robot 100. Additionally, a safety distance is included in the visual image and is marked. Thus, the robot 200 or a person can pass around not only the mobile robot 100 that travels, but also the entire mobile robot 100 that includes various carts connected to the rear thereof.

The practical examples where the safety area that are changed according to the travel state and the operational state of the mobile robot 100 are marked are described above. Practical examples are described in detail below, in which the travel safety is ensured by marking the safety area that is changed on the basis of the spatial environment in which the mobile robot 100 travels.

At this point, the expression 'on the basis of the spatial environment in which the mobile robot 100 travels' means 'on the basis of various types of environmental information perceived and/or collected on the basis of the sensing value from the sensing unit 140 of the mobile robot 100 and/or the information received through the communication unit 110 thereof'.

At this point, for example, various types of environmental information may include various types of information, such as a state of the ground in the space, within which the mobile robot 100 travels, a travel space in one direction, a congested section, a point that joins another travel path, a crossway, a travel-caution section including a corner or similar feature, a travel-risk section, and other relevant details.

In this context, FIG. 9 is an exemplary view that is referenced to describe how the safety area is marked in a varied manner when the mobile robot 100 travels along a corner.

The mobile robot 100 may recognize the position of itself and a wall state in the travel space through the sensing unit 140 while traveling within a designated travel space. However, in a case where the mobile robot 100 approaches a corner, the mobile robot 100 can perceive this approaching, but a person or the robot 200 that approaches from the opposite direction of the corner cannot perceive the presence of the mobile robot 100. In this case, the mobile robot 100 and a person or the robot 200 perceive each other when they reach a corner, raising concerns about collisions and accident risks.

Accordingly, the mobile robot 100 according to the embodiment of the present disclosure may reconfigure the visual image for the travel safety in an elongated manner before reaching a corner and may project the resulting visual image. Thus, the mobile robot 100 may control the projector 160 in such a manner that the projected visual image reaches the corner far earlier than the mobile robot 100.

Specifically, the mobile robot 100 may sense the surrounding situation of the mobile robot at the current position thereof through the sensing unit 140. The control unit 180 of the mobile robot 100 may perceive a crossway or a corner due to a sensed change in the surrounding situation. Subsequently, the control unit 180 controls the projector 160, based on the current position of the mobile robot 100 approaching a crossway or a corner, in such a manner as to change at least one of the following: the shape or the size of the first visual information.

At this point, the expression 'the current position of the mobile robot 100 approaching a crossway or a corner' may mean that the current position of the mobile robot 100 is positioned at a predetermined distance or more (for example, 3 m or more) away from a point corresponding to a crossway or a corner and that the mobile robot 100 is scheduled to travel toward the point from the predetermined distance.

In addition, in a practical example, the control unit 180 of the mobile robot 100 may control the projector 160 in correspondence with the extent to which the mobile robot 100 approaches the crossway or the corner, in such a manner as to adjust the extent of at least one change in the shape or the size of the first visual image for marking the safety area. Subsequently, when it is sensed that the mobile robot 100 has passed through the crossway or the corner, the control unit 180 may control the projector 160 in such a manner that the shape or the size of the first visual image is restored to the previous state thereof.

Traveling around the corner, which is described above, includes traveling to enter the crossway. In a case where the mobile robot 100 travels straight near the crossway, the mobile robot 100 itself does not travel around the corner; however, another robot has the likelihood of traveling around the corner. Therefore, in a case where the mobile robot 100 travels to enter the crossway, the mobile robot 100 may perform an operation necessary to travel around the corner.

With reference to FIG. 9, while traveling, the mobile robot 100 projects the first visual image 910 for marking the safety area. While traveling, the mobile robot 100 may perceive a predetermined distance that the mobile robot 100 is required to travel to reach the corner, on the basis of map data on the travel space or of the shape of the travel space sensed through the sensing unit 140. The mobile robot 100 may project the second visual image 920 at or beyond a predetermined distance before reaching the corner. The second visual image 920 results from varying the first visual image in such a manner as to be elongated toward the corner in the direction of progression of the mobile robot 100. At this point, the closer the mobile robot 100 gets to the corner (or the higher the speed of the mobile robot 100), the more the second visual image 920 is elongated toward the corner.

Accordingly, a person P or the robot 200 approaching the corner can remotely take precautions by visually checking a luminescent portion (light) of the second visual image 920.

In a practical example, while projecting the second visual image 920, the closer the mobile robot 100 gets to the corner, the higher the alert level the mobile robot 100 may raise. For example, as the mobile robot 100 approaches the corner, the mobile robot 100 may change the color of the second visual image 920 according to the raised alert level (for example, changing a color indicating a travel speed to red) and/or output warning sound through the sound output module 152. Alternatively, the mobile robot 100 may project the second visual image 920 with the flicking effect.

In this manner, each mobile robot 100 perceives a corner and projects the corner-varying visual image before reaching the corner. Thus, the likelihood of a collision can be reduced more reliably than when a sensor is installed on the wall at every corner. Furthermore, optimal travel safety can be ensured even in an environment where a layout is frequently changed such as in a warehouse.

After passing through the corner, the mobile robot 100 changes the second visual image 920 to the first visual image 910, which is an original state, and projects the resulting first visual image 910. At this point, according to the practical examples described above, the travel state and the operational state of the mobile robot 100 may be reflected in the first visual image 910.

In addition, an operation performed when the mobile robot 100 described above travels around a corner may be similarly applied even in a case where the mobile robot 100 travels in the direction of approaching a point that joins another travel path, a crossway, another caution section, a travel-risk section, or a similar area.

While the mobile robot 100 travels within a one-way travel space, in a case where the robot 200 attempts to enter the travel space from the opposite direction, the mobile robot 100 may perceive this attempt and additionally project the visual image indicating the direction of entering the travel space along with the safety area, thereby securing the travel safety.

As still another example, in a case where the mobile robot 100 is about to enter a congested section, the mobile robot 100 may initially emphasize the visual image for marking the safety area, which is to be projected, in such a manner that the robot 200 or a person in the congested section perceives the intention of the mobile robot 100 to enter the congested section. Subsequently, the mobile robot 100 may reflect travel state information, indicating a reduction in the travel speed, in the visual image and project the resulting visual image.

As yet another example, in a case where the mobile robot 100 senses that a state of the ground within the travel space is poor, the mobile robot 100 may project a warning image along with the visual image for marking the safety area, in such a manner that the robot 200 or a person in the vicinity of the mobile robot 100 takes caution at the affected area.

In this manner, the mobile robot 100 according to the embodiment of the present disclosure pre-perceives the environment of the space, within which the mobile robot 100 travels, reconfigures the visual image for securing the travel safety, and projects the resulting visual image. This process aids in remotely perceiving the presence of the mobile robot 100 even in the environment where the mobile robot 100 would otherwise be difficult to perceive. In addition, the caution section and the risk section that the mobile robot 100 senses while traveling can be externally marked in such a manner that the robot 200 or a person in the vicinity of the mobile robot 100 can perceive these sections, thereby aiding in securing the travel safety of the robot 200 or the safety of the person.

The mobile robot 100 according to the embodiment of the present disclosure may not only project, as the visual image, the current travel state or the operational state of itself and information on the current surrounding situation, but also externally pre-display the scheduled next operation to ensure the travel safety.

In this context, FIG. 10 is a flowchart that is referenced to describe another operational method of the mobile robot 100.

Unless otherwise specified, the operational method illustrated in FIG. 10 may be performed by the control unit 180 (or a processor) of the mobile robot 100. In addition, each step in the flowchart in FIG. 10 may be realized using a program command executed by at least one processor.

With reference to FIG. 10, while traveling, the mobile robot 100 may project the first visual information for marking the safety area through the projector 160 (1010).

At this point, the expression 'while the mobile robot 100 travels' includes: the mobile robot 100 traveling within a predetermined space; and the mobile robot 100 starting to operate but not yet moving or remaining stationary after completing a task. The reason for this is that, even in a state where the mobile robot 100 remains stationary, it is desirable to externally mark the safety area for a while to ensure the travel safety. This consideration accounts for a situation where mobile robot 100 waits to move by actually driving the travel unit 130 after starting to operate, or the likelihood of the mobile robot 100 moving within a predetermined time after completing a task.

To this end, the control unit 180 of the mobile robot 100 may project the first visual information for marking the safety area onto the ground before the mobile robot 100 starts to travel, and may control the projector 160, based on a predetermined time having elapsed after the mobile robot 100 stopped traveling, in such a manner as to interrupt the projection of the first visual information.

Next, the mobile robot 100 may determine the next operation of the mobile robot 100 based on at least one change in the travel state or the surrounding situation (1020).

At this point, the travel state of the mobile robot 100 may include at least one of the following: the travel direction of the mobile robot 100, the travel speed thereof, or the operational state thereof such as the use of a cart connected thereto. In addition, at this point, the surrounding situation of the mobile robot 100 may include environmental information (for example, a state of the ground, corner entering, a caution section, a risk section, and the like) of the travel space, perceived and/or collected through the sensing unit 140 and/or the communication unit 110 of the mobile robot 100, and a position or a state of a moving object.

The control unit 180 of the mobile robot 100 may change one or more of the following: the size, the shape, or the color of the visual image for marking the safety area, or determine whether or not a highlighting effect applies, as in the practical examples described above, based on at least one change in the travel state or the surrounding situation. To this end, the various practical examples described above with reference to FIGS. 2 to 9 may apply.

In addition, the control unit 180 of the mobile robot 100 may determine the next operation that the mobile robot 100 intends to perform to ensure the travel safety. based on at least one change in the travel state or the surrounding situation. At this point, examples of the next operation may include both active operations, such as a traveling-around operation of the mobile robot 100, and passive operations, such as a change in the travel speed, an alert to the caution section, and an alert to the risk section.

Subsequently, the mobile robot 100 may project the second visual information associated with the scheduled next operation through the projector 160, based on the determination of the next operation (1030).

At this point, the second visual information does not mean the visual image that indicates the change in the safety area for the mobile robot 100 itself, which varies with changes in the travel state, the operational state, and the surrounding environment of the mobile robot 100, which are described above.

The second visual information means the projection image associated with the next operation of the mobile robot 100, which the mobile robot 100 determines to perform to ensure the travel safety in addition to changing the safety area. At this point, the projection image associated with the next operation is pre-projected, as a visual image that enables intuitive recognition of what is the determined next operation, through the projector 160 before the mobile robot 100 performs the next operation.

In this manner, the mobile robot 100 alerts in advance the surroundings of the mobile robot 100 to the next operation in addition to the safety area for itself. Thus, it is possible for the mobile robot 100 and the robot 200 or a person to perceive each other in an area or state where communication is impossible and/or in a case where communication between them is not possible.

FIGS. 11A and 11B are exemplary views each illustrating that, while traveling, the mobile robot 100 externally marks the intention thereof to perform the travel-around operation, along with the safety area for itself, in response to an approaching obstacle.

FIG. 12 is an exemplary view illustrating that, while traveling, the mobile robot 100 externally marks the inability thereof to perform the travel-around operation, along with the safety area for itself, in response to an approaching obstacle.

Normally, when a nearby obstacle is sensed through the sensor, the mobile robot 100 may reduce the travel speed and then travel around the nearby obstacle or come to a stop to prevent a collision. However, the mobile robot 100 according to the present disclosure may preemptively alert the surroundings of the mobile robot 100 to the next operation of itself and guide the nearby obstacle to travel around the mobile robot 100 itself. As described above, this operation may be performed even in a case where the mobile robot 100 cannot communicate with the robot 200.

In a practical example, in a case where a nearby obstacle (for example, the robot 200) approaches the mobile robot 100, the next operation of the mobile robot 100 may vary depending on whether or not the mobile robot 100 can travel around the nearby obstacle.

At this point, the expression "a case where a nearby obstacle (for example, the robot 200) approaches the mobile robot 100' may refer to a case where the robot 200 has entered the safety area marked by the mobile robot 100 or is attempting to enter the safety area. This case can be distinguished from a usual case where the mobile robot 100 senses the presence of a nearby obstacle through the sensing unit 140.

In addition, at this point, the feasibility of the travel-around operation may be determined by considering two cases: one where the travel-around operation is not possible due to the state of the mobile robot 100 or the characteristics of the travel space; and the other where the travel-around operation is determined not to be performed due to the priority of a task assigned to the mobile robot 100 or for securing the travel safety.

In either case, the mobile robot 100 can mitigate concerns about collisions and reliably ensure the travel safety by alerting the surroundings of the mobile robot 100 to the next operation of itself, which is to be performed in response to an approaching obstacle. In addition, alerting the surroundings of the mobile robot 100 to the scheduled plan eliminates the need for both the mobile robot 100 and the robot 200 to perform the travel-around operation simultaneously, thereby enhancing travel efficiency, as well as securing the travel safety.

According to a practical example, before performing the scheduled next operation, the control unit 180 of the mobile robot 100 may control the projector 160 in such a manner as to project the second visual information indicating that a nearby obstacle is sensed.

At this point, the robot 200 visually perceives the second visual information through a camera or a similar device, and the manager observes the mobile robot 100 with his or her eyes. Thus, both the mobile robot 100 and the robot 200 can perceive that the presence of the mobile robot 100 itself has been sensed. In addition, the robot 200 may also output a signal indicating the intention of the robot 200 to perform the travel-around operation in response to the second visual information. In addition, in a case where the robot 200 includes a projector, in response to the second visual information, the robot 200 may also operate in such a manner that the visual image indicating the intention of the robot 200 to perform the travel-around operation is projected onto the ground and that the mobile robot 100 visually perceives this intention through the camera 121.

In addition, according to a practical example, the control unit 180 of the mobile robot 100 may control the projector 160, based on the determination that the mobile robot 100 needs to travel around the nearby obstacle as the next operation of the mobile robot 100, in such a manner as to project the second visual information indicating the position of a nearby obstacle before performing the travel-around operation.

For example, the control unit 180 of the mobile robot 100 may project a visual image, similar to the visual image for marking the safety area for the mobile robot 100 itself, onto an area in the vicinity of the perceived obstacle. In this case, the obstacle may perceive that the mobile robot 100 intends to travel around the obstacle and continue traveling. Accordingly, the inefficiency that occurs when both the mobile robot 100 and the obstacle simultaneously travel around each other is prevented, and the travel safety t is more reliably ensured through mutual perception.

In addition, while projecting the second visual information indicating the position of a nearby obstacle, the control unit 180 of the mobile robot 100 may reduce the travel speed of the mobile robot 100 and reflect the reduced travel speed in marking the safety area before performing the travel-around operation as the scheduled next operation. At this point, the control unit 180 may indicate a reduction in the travel speed through a change in the color image in a state where the size of the safety area to be marked is maintained.

With reference to FIG. 11A, the mobile robot 100 changes a visual image 1110, based on the sensing of the robot 200 approaching the mobile robot 100, in such a manner that the safety area is emphatically marked, and projects the resulting visual image 1110.

In addition, the mobile robot 100 may project a guide image 1150 indicating the position of the robot 200 onto an area in the vicinity of the robot 200 in order to indicate that the robot 200 has been sensed. At this point, the projection of the guide image 1150 may be understood as indicating that the mobile robot 100 determined to perform the travel-around operation.

The robot 200 may perceive the mobile robot 100 by visually perceiving the emphasized visual image 1110. In addition, the robot 200 may perceive that the robot 200 itself does not need to perform the travel-around operation, by visually perceiving the guide image 1150 in the vicinity of the robot 200.

With reference to FIG. 11B, the mobile robot 100 reduces the travel speed to perform the travel-around operation and reflects the reduced travel speed in marking the safety area by changing a color image of the visual image 1110. For example, the visual image may change from the red-colored visual image 1110 available before reducing the travel speed to a yellow-colored visual image 1120 available after reducing the travel speed.

In FIG. 11B, while the mobile robot 100 changes the travel direction to perform the travel-around operation after reducing the travel speed, the guide image 1150 indicating the position of the robot 200 may also be projected continuously. In addition, while the mobile robot 100 changes the travel direction to perform the travel-around operation, the shape of the yellow-colored visual image 1120 may be changed after reflecting the changed travel direction.

Even in a case where, after sensing an obstacle (for example, the robot 200) that enters the safety area or attempts to enter the safety area, the mobile robot 100 determines not to perform the travel-around operation, it is necessary to change the marking of the safety area in such a manner that this determination is perceptible from the outside.

To this end, in a case where the travel-around operation cannot be performed due to the travel state of the mobile robot 100 (this means that the travel-around operation is determined not to be performed), in order to allow the sensed nearby obstacle to move around the mobile robot 100, the control unit 180 of the mobile robot 100 may control the projector 160 in such a manner that third visual information indicating access restriction is projected onto the ground in the vicinity of the mobile robot 100.

At this point, the third visual information may be projected in a manner that overlaps with the first visual information for marking the safety area for the mobile robot 100. Alternatively, the third visual information, which includes a marking for guiding travel-around operation, may be projected onto the ground in the vicinity of the sensed obstacle.

For example, with reference to FIG. 12, the mobile robot 100 may project a visual image 1210, which indicates that the mobile robot 100 intends to maintain the current position and the traveling state of itself, in a manner that overlaps with the existing safety area. Concurrently or alternatively, the mobile robot 100 may project the visual image 1250 including directional information in such a manner that the sensed robot 200 performs the travel- around operation.

In this case, the robot 200 in FIG. 12 may visually recognize the visual image 1210 and/or the visual image 1250, which are projected by the mobile robot 100, and perform a travel operation for collision avoidance. In addition, the mobile robot 100 may continuously travel without a collision with the robot 200 instead of reducing the travel speed or coming to a stop.

In this manner, regardless of the marking of the safety area for securing the travel safety, when the robot 200 or a person approaches the mobile robot 100, the mobile robot 100 according to the embodiment of the present disclosure may determine whether or not the travel-around operation is performed and externally project the scheduled next operation or travel plan through the projector 160. Accordingly, not only can the likelihood of a collision be prevented, but an efficient travel operation can also be achieved through mutual perception.

Practical examples are described in detail below, in which the mobile robot 100 senses a plurality of nearby obstacles and ensures the safety area for at least one of the plurality of obstacles.

It is desirable that each of the plurality of mobile robots that travel within a predetermined travel space includes a projector and externally marks the safety area therefor. However, if this is not the case, the mobile robot 100 according to the embodiment of the present disclosure may instead alert the sensed robot 200 to the risk of a collision with a nearby person or another obstacle, which is caused by movement.

This alert aids in securing the travel safety within the entire travel space, especially in a case where the robot 200 encounters the mobile robot 100, but does not sense another obstacle, or in a case where the robot 200 travels in an abnormal state.

In this context, FIGS. 13A, 13B, and 13C are views, respectively, that are referenced to describe an example where, in a case where the mobile robot 100 senses a plurality of nearby obstacles, the mobile robot 100 marks the safety area by considering expected movements of these obstacles.

According to a practical example, the mobile robot 100 may sense a plurality of obstacles present in the vicinity of the mobile robot 100 through the sensing unit 140. At this point, sensing a plurality of obstacles present in the vicinity of the mobile robot 100 means that a plurality of obstacles is positioned at a predetermined distance away from the safety area, but is sensed through the sensing unit 140, not that a plurality of obstacles have entered the safety area marked by the mobile robot 100.

The mobile robot 100 may determine an operation of providing a safety guide for one of the plurality of obstacles, as the next operation, based on the sensing of the plurality of nearby obstacles. The reason for this is that the plurality of obstacles is positioned outside the safety area marked by the mobile robot 100, and therefore, there is no need to perform the travel-around operation. In a case where the relative positions of the plurality of obstacles are close to the mobile robot 100 or are predicted to be close to the mobile robot 100, the travel-around operation may be determined as the next operation.

Specifically, due to a change in the surrounding situation, the control unit 180 of the mobile robot 100 may determine to provide a mobile guide for a first obstacle as the next operation of the mobile robot 100, based on the sensing of the plurality of nearby obstacles through the sensing unit 140.

At this point, in a case where the obstacle are a person and a robot, the first obstacle may refer to the person. In addition, in a case where all the obstacles are the robots 200, the first obstacle may refer to the robot 200 that is close to the current position of the mobile robot 100.

The control unit 180 of the mobile robot 100 may control the projector 160, based on the determination to provide the mobile guide for the first obstacle, in such a manner as to project the visual information indicating the mobile guide, which is based on positions of the mobile robot 100 and a second obstacle other than the first obstacle.

At this point, the mobile guide for the first obstacle refers to a visual guide that can be projected to enable the first obstacle to move without colliding with the mobile robot 100 and the second obstacle. Therefore, the mobile guide for the first obstacle may also be referred to as a safety area for the first obstacle. In addition, the mobile guide for the first obstacle may be projected in a form suitable to mark the risk areas for the mobile robot 100 and the second obstacle.

Specifically, the visual information indicating the mobile guide for the first obstacle may be configured to include a first mobile guide and a second mobile guide. The first mobile guide indicates a 'safety area,' which is based on the positions of the mobile robot 100 and the second obstacle. The second mobile guide indicates a 'risk area,' which is based on the positions of the mobile robot 100 and the second obstacle. The second mobile guide is distinguished from the first mobile guide.

The first obstacle may safely move along the safety area included in the first mobile guide while avoiding the risk area included in the second mobile guide. Accordingly, the travel safety of the mobile robot 100 and the travel safety of the plurality of obstacles can be all ensured.

In a case where the second obstacle is the robot 200, which is also a mobile robot including a projector, the mobile robot 100 and the robot 200 may mark at least one of the first and second mobile guides, which are described above, on the respective safety areas.

Specifically, with reference to FIG. 13A, it is assumed that the mobile robot 100 projects a safety area 1310 for itself through the projector 160 and that the robot 200 also projects a safety area 1320 for itself through the projector. At this point, in a case where the person P, as the first obstacle, moves between the mobile robot 100 and the robot 200, a mobile guide for guiding the person P in moving safely may be determined to be projected.

The expected moving directions of the person P may be a first direction H1 and a second direction H2. With reference to FIG .13B, the mobile robot 100 may project a safety area 1310' that varies in such a manner as to include the second mobile guide for marking the risk area on the safety area. In addition, the robot 200 may also project a safety area 1320' that varies in such a manner as to include the second mobile guide for marking the risk area for itself. At this point, the position of the second mobile guide is determined by considering the travel direction of each of the mobile robot 100 and the robot 200. In addition, the second mobile guide may be marked in such a manner as to be emphasized using a visually distinguishable color image.

Then, the person P can safely move in the second direction H2 after visually checking the varied safety areas 1310' and 1320'.

In a case where the robot 200 does not include the projector and thus cannot mark the safety area for itself, the mobile robot 100 may alert the first obstacle to the risk area by instead marking the risk area on the basis of the position of the robot 200.

For example, with reference to FIG. 13C, this alert occurs in a case where there is a concern that the person P, who is the first obstacle sensed by the mobile robot 100, will collide with the robot 200 traveling behind, which is the second obstacle and does not include the projector.

This case is a situation where it is difficult for the person P to look back. Therefore, the mobile robot 100 may determine to mark the risk area instead of the robot 200 and accordingly project the risk area 1320 in such a manner as to correspond to the expected travel direction of the robot 200.

According to a practical example, in a case where the mobile robot 100 assures through the visual recognition that there is no visual image projected by the robot 200, the mobile robot 100 may determine to project the risk area for the robot 200 instead of the robot 200. The person P can move in a third direction H3 to avoid the safety area 1310 and the risk area 1320 for the robot 200.

Another practical example is described below, in which the mobile robot 100 externally marks the risk section, encountered while traveling, to ensure the travel safety.

In this context, FIGS. 14A, 14B, and 14C are views each illustrating the risk area sensed while the mobile robot 100 travels.

The mobile robot 100 may sense the state of the ground at a specific point or in a specific section through the sensing unit 140, for example, the ground sensor (not illustrated). The control unit 180 may determine the point or section in question as the risk area on the basis of the sensed state of the ground.

In a case where a task assigned to the mobile robot 100 has a high priority, the mobile robot 100 may transmit data on a travel map through the communication unit 110 and perform an update on the travel map. Otherwise, through the projector 160, the mobile robot 100 may project the visual image for marking the risk area for alerting the surroundings of the mobile robot to the point or section in question to ensure the travel safety.

To this end, the control unit 180 of the mobile robot 100 may detect the risk area based on the sensed state of the ground and control the projector 160 in such a manner as to project the second visual information indicating the detected risk area from before the mobile robot 100 comes to a stop as the determined next operation of the mobile robot 100.

At this point, the mobile robot 100 may indicate the visual information that varies according to the sensed cause of the risk.

For example, the mobile robot 100, as illustrated in FIG.14A, may project a symbol 1401 indicating the cause of sliding or a guide image 1410 including a colored pattern, onto the ground at the identified position. At this point, the guide image 100 may be projected in a different form (for example, a triangle) in such a manner as to be distinguished from the safety area for the mobile robot 100.

In addition, for example, the mobile robot 100, as illustrated in FIG. 14B, may project a symbol 1402 indicating the risk of a ground cave-in or a guide image 1420 including a colored pattern, onto the ground at the identified position. At this point, other nearby robots 200A and 200B mark safety areas for themselves, respectively. Consequently, the mobile robot 100 and the nearby robots 200A and 200B may sense one another, and the nearby robots 200A and 200B may travel around the guide image 1420. This travel-around operation is for traveling around the risk area and is distinguished from the travel-around operation for preventing a collision with the mobile robot 100.

In addition, for example, the mobile robot 100, as illustrated in FIG. 14C, may project a symbol 1403 indicating the risk of falling down a precipice or a guide image 1430 including a colored pattern, onto the ground at the identified position. In this case, a nearby robot 200C may remotely identify the point in question through visual recognition and modify a travel plan to avoid the risk of falling down a precipice.

Although not illustrated, the visual images 1410, 1420, and 1430, which indicate the causes of the risks illustrated in FIGS. 14A to C, respectively, may be identified by the manager through visual monitoring. In addition, according to need, through mutual recognition with the robot 200, which has a projector function, the mobile robot 100 may also operate in such a manner as to alternately mark the risk area in a successive manner.

As described above, according to the embodiment of the present disclosure, while traveling, the mobile robot 100 marks the safety area through the projector 160. Furthermore, while traveling, the mobile robot adaptively varies the safety area according to the travel state and the surrounding situation of the mobile robot 100. Consequently, the travel safety can be ensured in a more reliable manner and can be quickly recognized from the outside. In addition, the visual information for ensuring the travel safety can be projected in various forms. The visual information to be projected may be flexibly varied in such a manner as to reflect the safety area that is changed according to the travel state and the surrounding situation of the mobile robot 100. In addition, mutual recognition is possible without direct communication between the mobile robot 100 and the robot 200 in the vicinity thereof, allowing them to recognize each other's next operations for the travel safety. Accordingly, the mobile robot 100 can effectively deal with the robot 200 to prevent a collision or a similar accident, and a manager can visually anticipate the next operation of the mobile robot 100. Moreover, in accordance with the purpose of using the mobile robot 100, the mobile robot 100 is used with the moving body 850 being connected to the rear of the mobile robot 100. In this case, pieces of information such as the presence of the moving body 850, the number of connected moving bodies 850, and the loads present on the moving bodies 850 are included in the visual image for the safety area, which is projected onto the ground in front of the mobile robot 100. Additionally, the safety distance is included in the visual image and is marked. Thus, the robot 200 or a person can pass around not only the mobile robot 100 that travels, but also the entire mobile robot 100 that includes various carts connected to the rear thereof. In addition, the caution section and the risk section that the mobile robot 100 senses while traveling can be externally marked in such a manner that the robot 200 or a person in the vicinity of the mobile robot 100 can perceive these sections, thereby aiding in securing the travel safety of the robot 200 or the safety of the person.

Further scope of applicability of the present disclosure will become apparent from the detailed description. It should be understood, however, that the detailed description and specific examples, such as the preferred embodiment of the disclosure, are given by way of illustration only, since various changes and modifications within the spirit and scope of the disclosure will be apparent to those skilled in the art.

Features, structures, effects, and the like described in those embodiments are included in at least one embodiment of the present disclosure, and are not necessarily limited to only one embodiment. Furthermore, features, structures, effects, and the like illustrated in each embodiment may be combined or modified with respect to other embodiments by those skilled in the art to which the embodiments belong. Therefore, contents related to such combinations and modifications should be construed as being included in the scope of the present disclosure.

**Claims**

1. A mobile robot (100) comprising:

   a projector (160) provided on one side of the mobile robot (100) in such a manner as to project visual information; and
   a control unit (180) configured to control the projector (160) in such a manner as to externally project the visual information,
   wherein the control unit (180) controls the projector (160) in such a manner that first visual information (310, 410, 710, 810, 910, 1110, 1310, ) for marking a safety area is projected onto the ground in the vicinity of the mobile robot while the mobile robot travels, determines, based on at least one change in a travel state or a surrounding situation of the mobile robot, that the safety area is changed, and controls the projector (160) in such a manner that the first visual information is changed according to the determination and that the changed first visual information (420, 430, 510, 520, 610, 620, 720, 820, 830, 920, 1120, 1210, 1310', 1320, 1410, 1420, 1430) is projected.

2. The mobile robot (100) of claim 1, wherein the safety area is an access restriction area determined on the basis of a form and the travel state of the mobile robot (100), and
   wherein the first visual information is at least one of the following: an image or text that indicates the access restriction area in a manner that is visually distinguished from the surroundings of the mobile robot (100).

3. The mobile robot (100) of any one of claims 1 to 2, further comprising:

   a sensing unit (140) configured to sense a travel speed of the mobile robot(100),
   wherein the control unit (180) perceives the sensed travel speed as a change in the travel state of the mobile robot (100), determines a change in the safety area, and controls the projector (160) in such a manner that at least one of the following: a color or a size of the first visual information is changed according to the determination.

4. The mobile robot (100) of claim 3, wherein the sensing unit (140) senses a travel direction of the mobile robot(100), and
   wherein the control unit (180) controls the projector (160) in such a manner that an image shape of the first visual information is elongated toward the sensed travel direction.

5. The mobile robot (100) of any one of claims 3 to 4, wherein an image size of the first visual information increases or decreases in correspondence with the sensed travel speed, and an image color of the first visual information changes in such a manner that a warning level varies in correspondence with the sensed travel speed.

6. The mobile robot (100) of any one of claims 1 to 5, further comprising:

   a sensing unit (140) configured to sense an obstacle in the vicinity of the mobile robot (100),
   wherein the control unit (180) controls the projector (160), based on the sensed obstacle approaching the mobile robot (100), in such a manner that the first visual information varies according to a state of the sensed obstacle.

7. The mobile robot (100) of any one of claims 1 to 6, wherein the travel state includes an operational state that varies depending on whether another moving body is connected,
   wherein the control unit (180) senses the moving body connected to a connection member of the mobile robot (100), and controls the projector (160), based on information on the moving body, in such a manner that the first visual information is changed and that the changed first visual information is projected.

8. The mobile robot (100) of claim 7, wherein the information on the moving body includes information on the number of moving bodies connected to the mobile robot (100), and
wherein the control unit (180) controls the projector (160), based on the information on the number of connected moving bodies, in such a manner that at least one of the following varies: a size or a shape of the first visual information.

9. The mobile robot (100) of any one of claims 7 and 8, wherein the information on the moving body includes information on an amount of load present on the moving body connected to the mobile robot (100), and
wherein the control unit (180) estimates an access restriction area based on the information on the amount of load present on the moving body, and controls the projector (160) in such a manner as to change at least one of the following according to the estimated access restriction area: a size or a shape of the first visual information.

10. The mobile robot (100) of any one of claims 1 to 9, further comprising:

a sensing unit (140) configured to sense a surrounding situation of the mobile robot (100) at a position of the mobile robot (100),
wherein the control unit (180) perceives a crossway or a corner due to a change in the surrounding situation of the mobile robot (100) and controls the projector (160), based on the mobile robot (100) approaching the crossway or the corner, in such a manner as to change at least one of the following: a shape or a size of the first visual information.

11. The mobile robot (100) of any one of claims 1 to 10, wherein the control unit (180) projects the first visual information onto the ground before the mobile robot (100) starts to travel, and, based on a predetermined time having elapsed after the mobile robot (100) stopped traveling, interrupts the projection of the first visual information.

12. A mobile robot (100) comprising:

a projector (160) provided on one side of the mobile robot (100) in such a manner as to project visual information; and
a control unit (180) configured to control the projector (160) in such a manner as to externally project the visual information,
wherein the control unit (180) controls the projector (160) in such a manner that first visual information for marking a safety area is projected onto the ground in the vicinity of the mobile robot (100) while the mobile robot (100) travels, determines the next operation of the mobile robot (100) based on at least one change in a travel state or a surrounding situation of the mobile robot, and controls the projector (160) in such a manner that a second visual information associated with the scheduled next operation is projected according to the determination.

13. The mobile robot (100) of claim 12, further comprising:

a sensing unit (140) configured to sense an obstacle in the vicinity of the mobile robot (100),
wherein the control unit (180) determines the next operation of the mobile robot (100) based on the obstacle approaching the mobile robot (100) due to a change in the surrounding situation and controls the projector (160) in such a manner that the second visual information indicating the sensing of the obstacle is projected according to the determination before the scheduled next operation is performed.

14. The mobile robot (100) of any one of claims 12 and 13, further comprising:
a sensing unit (140) configured to sense an obstacle in the vicinity of the mobile robot(100), wherein as the next operation of the mobile robot(100), the control unit (180) determines to provide a mobile guide for a first obstacle, based on the sensing of a plurality of obstacles due to a change in the surrounding situation, and controls the projector (160) in such a manner that the second visual information indicating the mobile guide based on positions of the mobile robot (100) and the second obstacle, is projected according to the determination.

15. The mobile robot (100) of any one of claims 12 to 14, further comprising:

a sensing unit (140) configured to sense a state of the ground while the mobile robot (100) travels,
wherein the control unit (180) detects a risk area based on the sensed state of the ground and controls the projector (160) in such a manner that the second visual information indicating the detected risk area is marked before the mobile robot (100) comes to a stop as the next operation thereof.

## FIG. 1

POWER SUPPLY UNIT — 190

180

110 — COMMUNICATION UNIT

CONTROL UNIT

OUTPUT UNIT — 150
DISPLAY UNIT — 151
SOUND OUTPUT MODULE — 152
OPTICAL OUTPUT UNIT — 153

120 — INPUT UNIT
121 — CAMERA
122 — MICROPHONE

140 — SENSING UNIT
141 — PROXIMITY SENSOR

MEMORY — 170
TRAVEL UNIT — 130

PROJECTOR — 160

100

## FIG. 2

PROJECT FIRST VISUAL INFORMATION FOR MARKING SAFETY AREA ONTO GROUND IN VICINITY OF MOBILE ROBOT WHILE MOBILE ROBOT TRAVELS — 10

DETERMINE THAT SAFETY AREA IS CHANGED, BASED ON AT LEAST ONE CHANGE IN TRAVEL STATE OR SURROUNDING SITUATION OF MOBILE ROBOT — 20

CONTROL PROJECTOR IN SUCH MANNER THAT FIRST VISUAL INFORMATION IS CHANGED ACCORDING TO DETERMINATION AND THAT CHANGED FIRST VISUAL INFORMATION IS PROJECTED — 30

# FIG. 3A

# FIG. 3B

## FIG. 3C

## FIG. 4

(a) STATIONARY STATE  (b) LOW-SPEED STATE  (c) HIGH-SPEED STATE

SPEED INCREASES

# FIG. 5

(a)                    (b)

# FIG. 6

(a)                    (b)

# FIG. 7

# FIG. 8A

810

850

# FIG. 8B

820

850

# FIG. 8C

# FIG. 8D

# FIG. 9

LIGHT

920

100

910

100

P

# FIG. 10

| PROJECT FIRST VISUAL INFORMATION FOR MARKING SAFETY AREA ONTO GROUND IN VICINITY OF MOBILE ROBOT | 1010 |

| DETERMINE NEXT OPERATION OF MOBILE ROBOT BASED ON AT LEAST ONE CHANGE IN TRAVEL STATE OR SURROUNDING SITUATION OF MOBILE ROBOT | 1020 |

| PROJECT SECOND VISUAL INFORMATION ASSOCIATED WITH SCHEDULED NEXT OPERATION ACCORDING TO DETERMINATION | 1030 |

# FIG. 11A

# FIG. 11B

# FIG. 12

# FIG. 13A

# FIG. 13B

# FIG. 13C

## *FIG. 14A*

## *FIG. 14B*

# FIG. 14C

Europäisches
Patentamt

European
Patent Office

Office européen
des brevets

# EUROPEAN SEARCH REPORT

**Application Number**

EP 25 15 4032

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y<br>A | JP 2009 123045 A (TOYOTA MOTOR CORP)<br>4 June 2009 (2009-06-04)<br>* abstract; figures 1, 2, 5A-5D *<br>* paragraph [0016] *<br>* paragraph [0021] *<br>* paragraph [0023] - paragraph [0026] *<br>* paragraph [0030] *<br>* paragraph [0032] *<br>----- | 1-4,11,<br>12<br>5,7-9<br>6,10,<br>13-15 | INV.<br>B25J19/02<br>B25J19/06<br>B25J5/00<br>B25J11/00 |
| X<br>Y | US 2021/157326 A1 (TAKAI TOMOHISA [JP] ET<br>AL) 27 May 2021 (2021-05-27)<br>* abstract; figures 1-10 *<br>* paragraph [0035] - paragraph [0036] *<br>* paragraph [0042] - paragraph [0043] *<br>* paragraph [0054] - paragraph [0055] *<br>* paragraph [0061] *<br>----- | 1,6,12<br>5,13-15 | |
| X | US 2020/254925 A1 (ZEVENBERGEN JOHN [US]<br>ET AL) 13 August 2020 (2020-08-13)<br>* abstract; figures 1, 4A-5 *<br>* paragraph [0047] *<br>* paragraph [0095] *<br>* paragraph [0108] *<br>* paragraph [0115] - paragraph [0116] *<br>* paragraph [0119] *<br>----- | 1,10,12 | |
| Y | EP 2 492 173 A2 (STILL GMBH [DE])<br>29 August 2012 (2012-08-29)<br>* abstract; figures 1, 2 *<br>* paragraph [0041] *<br>* paragraph [0052] *<br>* paragraph [0055] *<br>----- | 7-9 | **TECHNICAL FIELDS SEARCHED (IPC)**<br><br>B25J<br>B60Q<br>F21W |
| Y | US 2015/339926 A1 (LANGE CORINNA [DE] ET<br>AL) 26 November 2015 (2015-11-26)<br>* abstract; figures 2-7 *<br>* paragraph [0050] *<br>----- | 13-15 | |

The present search report has been drawn up for all claims

| Place of search | Date of completion of the search | Examiner |
|---|---|---|
| Munich | 17 April 2025 | Iraola, Jon |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 25 15 4032

This annex lists the patent family members relating to the patent documents cited in the above-mentioned European search report.
The members are as contained in the European Patent Office EDP file on
The European Patent Office is in no way liable for these particulars which are merely given for the purpose of information.

17-04-2025

| Patent document cited in search report | Publication date | Patent family member(s) | Publication date |
|---|---|---|---|
| JP 2009123045 A | 04-06-2009 | JP 2009123045 A<br>WO 2009063318 A1 | 04-06-2009<br>22-05-2009 |
| US 2021157326 A1 | 27-05-2021 | CN 112835357 A<br>JP 2021086217 A<br>US 2021157326 A1 | 25-05-2021<br>03-06-2021<br>27-05-2021 |
| US 2020254925 A1 | 13-08-2020 | US 2019193629 A1<br>US 2020254925 A1 | 27-06-2019<br>13-08-2020 |
| EP 2492173 A2 | 29-08-2012 | DE 102011012407 A1<br>EP 2492173 A2 | 30-08-2012<br>29-08-2012 |
| US 2015339926 A1 | 26-11-2015 | DE 102014209791 A1<br>GB 2527665 A<br>US 2015339926 A1 | 26-11-2015<br>30-12-2015<br>26-11-2015 |

EPO FORM P0459

For more details about this annex : see Official Journal of the European Patent Office, No. 12/82

**EP 4 647 219 A1**